# EUROPEAN PATENT APPLICATION

(11) **EP 4 686 211 A1**
(43) Date of publication of application: **28.01.2026**
(21) Application number: 24306231.2
(22) Date of filing: 23.07.2024
(51) Int. Cl.: H04N 21/81, H04N 21/854, H04N 21/234

(54) **SIGNALING AVATAR LANDMARKS IN SCENE DESCRIPTION**

(71) Applicant: InterDigital CE Patent Holdings, SAS, 75017 Paris (FR)
(72) Inventor: GOSSELIN, Philippe Henri, 35235 THORIGNE-FOUILLARD (FR); COVA REGATEIRO, João Pedro, 35220 CHATEAUBOURG (FR); LE CLERC, Francois, 35590 L'HERMITAGE (FR)
(74) Representative: Vossius & Partner Patentanwälte Rechtsanwälte mbB

(57) **Abstract**

Some embodiments of a method may include: obtaining information corresponding to an avatar, wherein the information comprises a set of attributes associated with the avatar; parsing the information for a first attribute of the set of attributes, wherein the first attribute comprises a connection of a mesh to the avatar; parsing the information for a second attribute of the set of attributes, wherein the second attribute corresponds to a type property of the avatar; and providing a feature related to the mesh in a 3D scene using the parsed attributes of the avatar.

## Description

### INCORPORATION BY REFERENCE

The present application incorporates by reference in their entirety the following applications: European Patent Application Serial No. EP24305094, entitled "AVATAR JSON INTERCHANGE FILE FORMAT" and filed January 15, 2024 (‴094 application"); and European Patent Application Serial No. EP24306025, entitled "3D GAUSIANS SPLATTING IN SCENE DESCRIPTION" and filed June 26, 2024 (‴025 application").

### BACKGROUND

The present application is related to avatar interoperability.

The current MPEG-I Scene Description (SD) format using the MPEG_node_avatar extension allows the definition of an avatar model. Thanks to these features, applications may know which mesh is an avatar. For instance, if the avatar is a human body mesh, an application may place the mesh in a scene and let the user move the mesh in the world.

### SUMMARY

An example method in accordance with some embodiments may include: obtaining information corresponding to an avatar, wherein the information includes a set of attributes associated with the avatar; parsing the information for a first attribute of the set of attributes, wherein the first attribute includes a connection of a mesh to the avatar; parsing the information for a second attribute of the set of attributes, wherein the second attribute corresponds to a type property of the avatar; and providing a feature related to the mesh in a 3D scene using the parsed attributes of the avatar.

For some embodiments of the example method, parsing the information for the first attribute of the set of attributes includes performing a processing loop to process one or more landmark attributes.

For some embodiments of the example method, at least one of the one or more landmark attributes includes a vertex index associated with the mesh.

For some embodiments of the example method, at least one of the one or more landmark attributes includes a face index associated with the mesh and a set of one or more barycenter weights associated with the mesh.

For some embodiments of the example method, the landmark attributes include at least two sets of landmark attributes.

For some embodiments of the example method, parsing the information for the first attribute of the set of attributes includes: parsing the information for a first landmark attribute of a set of landmark attributes, wherein the first landmark attribute includes a landmark connection of a landmark to the avatar; parsing the information for a second landmark attribute of the set of landmark attributes, wherein the second landmark attribute corresponds to a type property of the landmark; and parsing the information for a third landmark attribute of the set of landmark attributes, wherein the third landmark attribute corresponds to a description of the landmark.

Some embodiments of the example method may further include parsing the information for a third attribute of the set of attributes, wherein the third attribute corresponds to a description of the avatar;

Some embodiments of the example method may further include parsing the information for a fourth attribute of the set of attributes, wherein the fourth attribute corresponds to a name of the avatar;

Some embodiments of the example method may further include parsing the information for a fifth attribute of the set of attributes, wherein the fifth attribute corresponds to a property of the mesh;

Some embodiments of the example method may further include parsing the information for a sixth attribute of the set of attributes, wherein the sixth attribute corresponds to a skeleton property of the mesh;

Some embodiments of the example method may further include parsing the information for a seventh attribute of the set of attributes, wherein the seventh attribute corresponds to a level of detail property of the mesh;

For some embodiments of the example method, the information complies with an Avatar Json Interchange File Format (AJIF) protocol.

For some embodiments of the example method, the information complies with a Graphics Library Transmission Format (gITF) protocol.

For some embodiments of the example method, the information complies with a format based on an MPEG-I extension standard.

An example apparatus in accordance with some embodiments may include: a processor; and a memory storing instructions operative, when executed by the processor, to cause the apparatus to perform the method of any one of the methods listed above.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1A is a system diagram illustrating an example set of interfaces for a system according to some embodiments.
FIG. 1B is a system diagram illustrating an example set of interfaces for a scene description (stored as an item in gITF.json), three video tracks, an audio track, and a JSON patch update track in an ISOBMFF file according to some embodiments.
FIG. 1C is a system diagram illustrating an example set of interfaces for an MPEG-I node hierarchy supporting elements of scene interactivity according to some embodiments.
FIG. 1D is a schematic plan view illustrating example relationships of extended reality scene description objects according to some embodiments.
FIG. 2 is a schematic illustration showing example facial landmarks defined in the Morgan avatar model.
FIG. 3 is a flowchart illustrating an example process for parsing an LOD property according to some embodiments.
FIG. 4 is a flowchart illustrating an example process for processing a node of a glTF file according to some embodiments.
FIG. 5 is a flowchart illustrating an example process for parsing a *LandmarkSet* property according to some embodiments.
FIG. 6 is a flowchart illustrating an example process for parsing a *Landmark* property according to some embodiments.
FIG. 7 is a flowchart illustrating an example process for parsing an avatar data structure according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

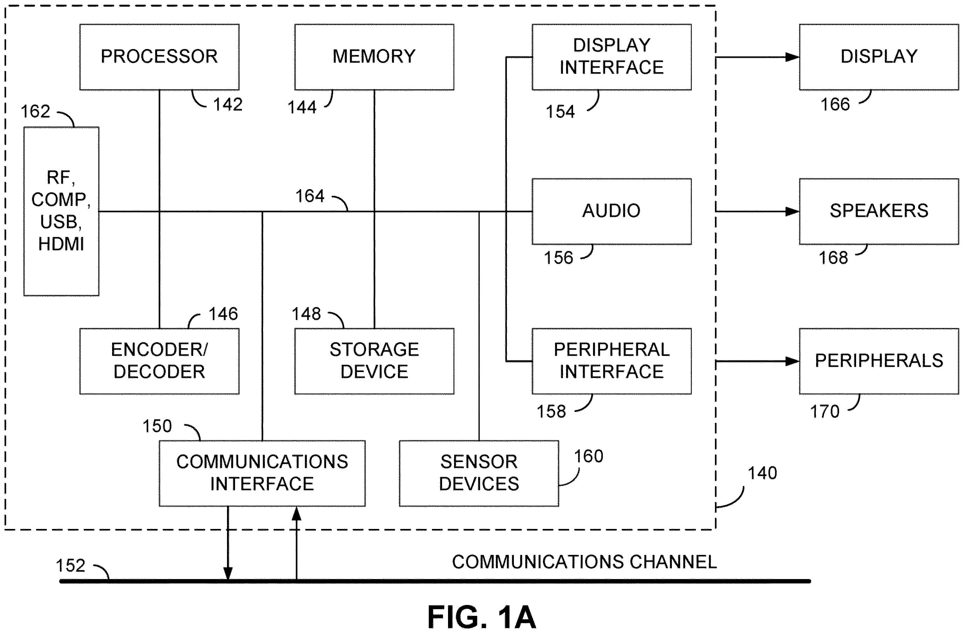

FIG. 1A is a system diagram illustrating an example set of interfaces for a system according to some embodiments. An extended reality display device, together with its control electronics, may be implemented using a system such as the system of FIG. 1A. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1A, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (12C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

### Scene Description Framework for XR

In some embodiments, examples disclosed herein may be used in the domain of rendering of extended reality scene description and extended reality rendering. For some embodiments, for example, the present application may be applied in the context of the formatting and the playing of extended reality applications when rendered on end-user devices such as mobile devices or Head-Mounted Displays (HMD). For some example embodiments, glTF material may be rendered in a 3D environment that is rendered through a 2D screen. The examples presented herein in accordance with some embodiments are not limited to XR applications.

In XR applications, a scene description is used to combine explicit and easy-to-parse description of a scene structure and some binary representations of media content.

In time-based media streaming, the scene description itself can be time-evolving to provide the relevant virtual content for each sequence of a media stream. For instance, for advertising purpose, a virtual bottle can be displayed during a video sequence where people are drinking.

This kind of behavior can be achieved by relying on the framework defined in the Scene Description for MPEG media document, Information technology - Coded representation of immersive media - Part 14: Scene Description for MPEG media, ISO/IEC DIS 23090-14 :2021 (E). A scene update mechanism based on the JSON Patch protocol as defined in IETF RFC 6902 may be used to synchronize virtual content to MPEG media streams.

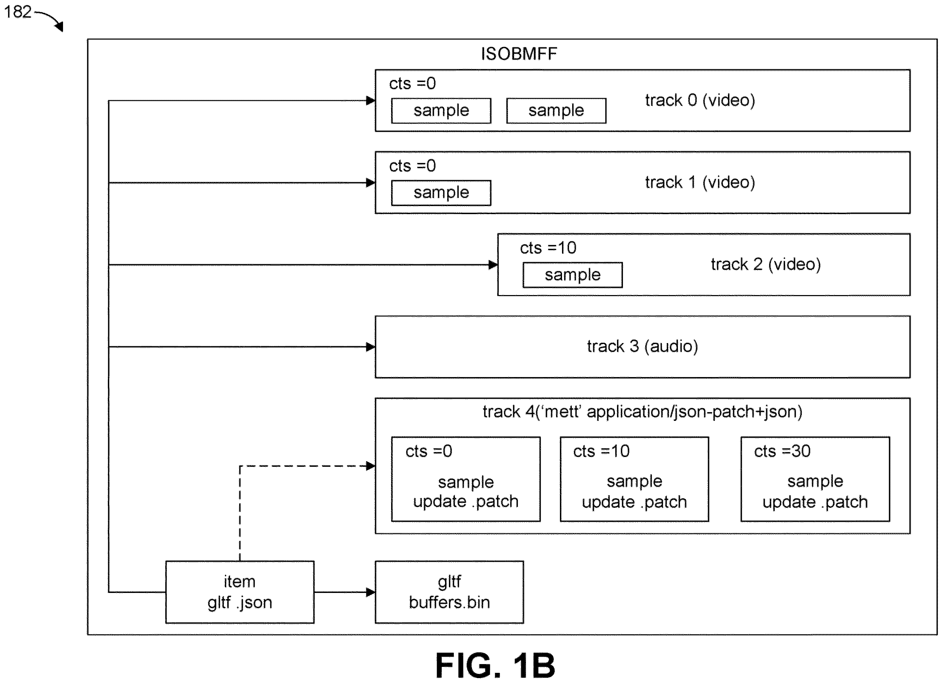

FIG. 1B is a system diagram illustrating an example set of interfaces for a scene description (stored as an item in glTF.json), three video tracks, an audio track, and a JSON patch update track in an ISOBMFF file 182 according to some embodiments.

### Runtime Interactivity

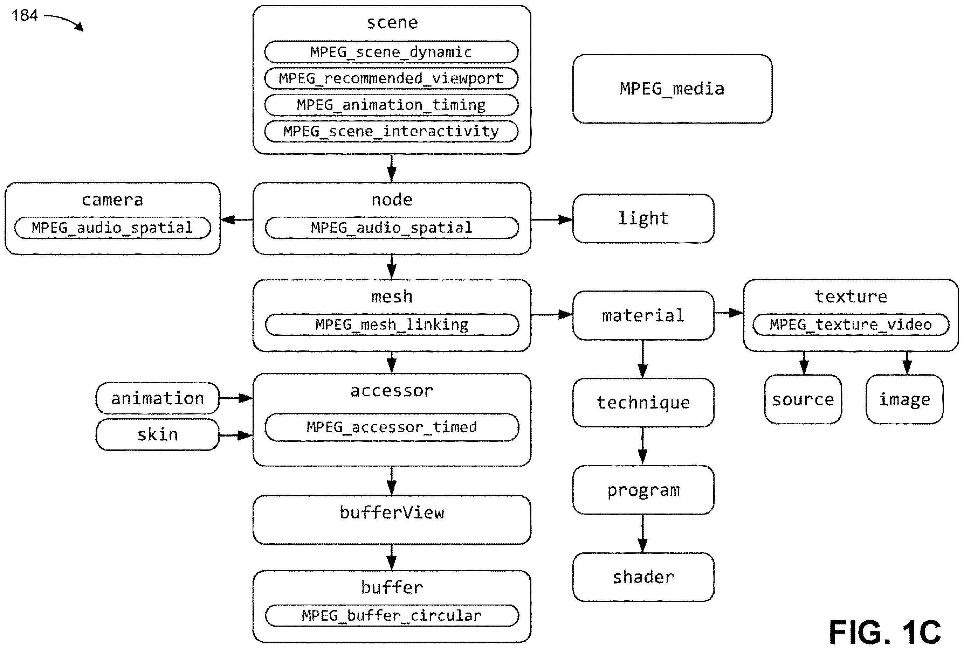

FIG. 1C is a system diagram illustrating an example set of interfaces for an MPEG-I node hierarchy 184 supporting elements of scene interactivity according to some embodiments.

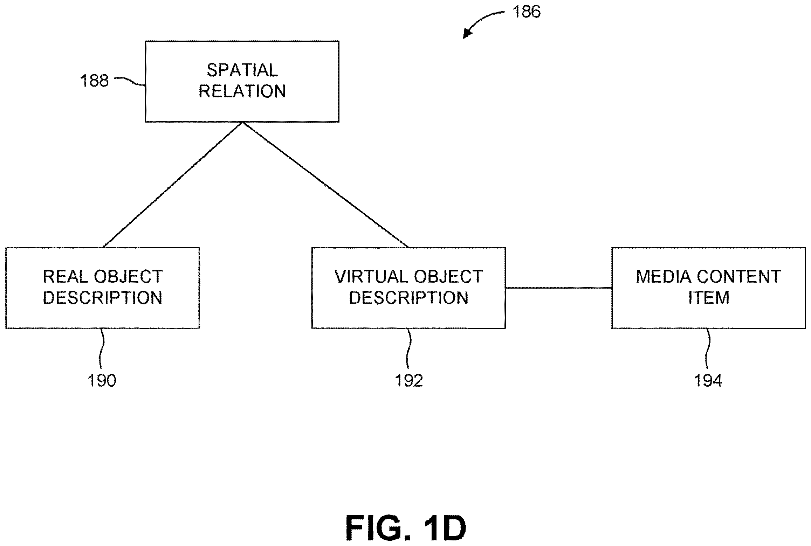

FIG. 1D is a schematic plan view illustrating example relationships of extended reality scene description objects according to some embodiments. In this example, the scene graph 186 includes a description of a real object 190, for example 'plane horizontal surface' (that can be a table or the floor or a plate) and a description of a virtual object 192, for example an animation of a walking character. Scene graph node 192 is associated with a media content item 194 that is the encoding of data used to render and display the walking character (for example as a textured animated 3D mesh). Scene graph 186 also includes a node 188 that is a description of the spatial relation between the real object described in node 190 and the virtual object described in node 192. In this example, node 188 describes a spatial relation to make the character walk on the plane surface. When the XR application is started, media content item 194 is loaded, rendered and buffered to be displayed when triggered. When a plane surface is detected in the real environment by sensors (or a camera for some embodiments), the application displays the buffered media content item as described in node 188. The timing is managed by the application according to features detected in the real environment and to the timing of the animation. A node of a scene graph may also include no description and only play a role of a parent for child nodes.

XR applications are various and may apply to different context and real or virtual environments. For example, in an industrial XR application, a virtual 3D content item (e.g. a piece A of an engine) is displayed when a reference object (piece B of an engine) is detected in the real environment by a camera rigged on a head mounted display device. The 3D content item is positioned in the real-world with a position and a scale defined relatively to the detected reference object.

For example, in an XR application for interior design, a 3D model of a furniture is displayed when a given image from the catalog is detected in the input camera view. The 3D content is positioned in the real-world with a position and scale which is defined relatively to the detected reference image. In another application, some audio file might start playing when the user enters an area which is close to a church (being real or virtually rendered in the extended real environment). In another example, an ad jingle file may be played when the user sees a can of a given soda in the real environment. In an outdoor gaming application, various virtual characters may appear, depending on the semantics of the scenery which is observed by the user. For example, birds characters are suitable for trees, so if the sensors of the XR device detect real objects described by a semantic label 'tree', birds can be added flying around the trees. In a companion application implemented by smart glasses, a car noise may be launched in the user's headset when a car is detected within the field of view of the user camera, in order to warn him of the potential danger; Furthermore, the sound may be spatialized in order to make it arrive from the direction where the car was detected.

An XR application may also augment a video content rather than a real environment. The video is displayed on a rendering device and virtual objects described in the node tree are overlaid when timed events are detected in the video. In such a context, the node tree includes only virtual objects descriptions.

Example embodiments are described with reference to the scope of the MPEG-I Scene Description framework using the Khronos glTF extension mechanism, which supports additional scene description features, such as a node tree. However, the principles described herein are not limited to a particular scene description framework.

In an example embodiment, the glTF scene description is extended to support interactivity. The interactivity extension applies at the glTF scene level and is called MPEG_scene_interactivity. See the document ISO/IEC 23090-14, *CDAM 2: Support for Haptics, Augmented Reality, Avatars, Interactivity,* MPEG-I *Audio, and Lighting,* ISO/IEC JTC 1/SC 29/WG 03 N00797 *("MPEG Extension").*

Extended reality (XR) is a technology enabling interactive experiences where the real-world environment and/or a video content is enhanced by virtual content, which can be defined across multiple sensory modalities, including visual, auditory, haptic, etc. During runtime of the application, the virtual content (3D content or audio/video file for example) is rendered in real-time in a way which is consistent with the user context (environment, point of view, device, etc.). Scene graphs (such as the one proposed by Khronos / glTF and its extensions defined in MPEG Scene Description format or Apple / USDZ for instance) are a possible way to represent the content to be rendered. They combine a declarative description of the scene structure linking real-environment objects and virtual objects on one hand, and binary representations of the virtual content on the other hand.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

This application relates to the encoding of avatar landmarks in 3D scene representations. Landmarks are points on a 3D mesh with a stable semantic meaning. For instance, the top of the nose is a landmark which, from a semantical point of view, is (always) at the same location on the face, but has different coordinates from one avatar to another.

The current MPEG-I Scene Description (SD) format using the MPEG_node_avatar extension allows the definition of an avatar model. Thanks to these features, applications may know which mesh is an avatar. For instance, if the avatar is a human body mesh, an application may place the mesh in a scene and let the user move the mesh in the world. The Avatar Json Interchange File Format (AJIF) protocol / format, which was introduced in the '094 application, may be used to encode an avatar model.

Landmarks may be used with an avatar to provide features. For instance, facial landmarks may be used to calibrate XR devices or to capture animation. They also may be used for registering the topology of an avatar against other avatar topologies.

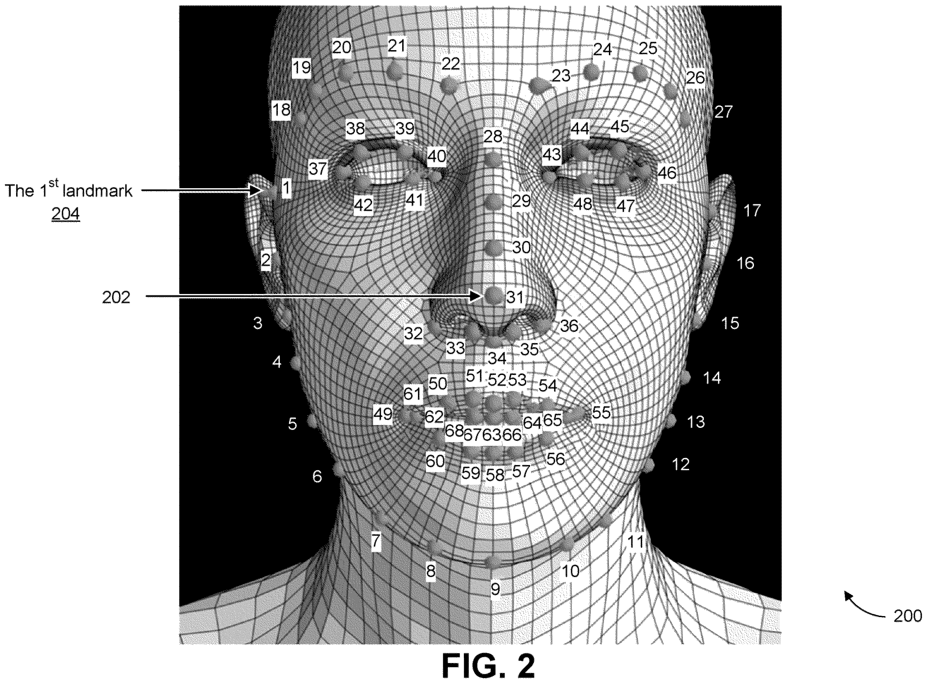

FIG. 2 is a schematic illustration showing example facial landmarks defined in the Morgan avatar model. The MPEG Morgan avatar model, specified in the text of Annex H, *Support for Haptics, Augmented Reality, Avatars, Interactivity, MPEG-I Audio, and Lighting,* ISO/IEC 23090-14 DAM 2 (See § H.3.4), defines a set of 68 facial landmarks. See FIG. 2 to see such locations on an example avatar model 200.

Landmarks are points on a mesh with a stable semantic meaning. For instance, landmarks index 31 (202) is the one on the top of the nose in FIG. 2. Additionally, the first landmark has an index of 0 (204). This stable location may be stored for given a topology. For instance, the index of a vertex may define such a location. As a result, even if the mesh changes (e.g., the coordinates of one or more vertices change), as long as the topology remains the same, the location of the landmarks remains the same. For example, in the Morgan topology, the index of vertex on the top of the nose is 8616, which corresponds to landmarks index 31 (202). The location of the landmarks also may be stored using the index of a face and three barycentric coordinate weights: this case is not limited to vertices, and any location on the mesh may be used.

As understood, there is no method to signal landmark sets in current scene description formats. At least two files may be used for signaling such information: one with the avatar model (any format which supports avatar encoding, like gITF), and one with landmarks (any format which supports points encoding, like CSV). Then, an application or a user has to link the two files. Furthermore, there is no known method to signal the type, meaning, or purpose of a landmark set. For instance, the landmark semantic definition used by the above-referenced MPEG Morgan avatar model is based on a common landmark set, which may be used in face datasets and applications.

A landmark semantic definition does not define the location on a topology (vertex or face/weights), but rather a location in a semantic fashion, for instance "the top of the nose" or "center of the left ear". This information may be required to enable certain features. For instance, facial landmark coordinates may be predicted on a user whose face is captured by a webcam. Then, the landmarks may be transposed to the avatar, which reproduces the user expressions. All this work may be generated automatically because the application knows the landmarks location on the avatar model, and may choose the right facial landmarks detector since the application also knows the landmark semantic definition.

The context is one of avatar interoperability, where a user possesses an avatar encoded into one or more files (preferably gITF or AJIF). The avatar files may be required to contain everything an application needs to implement the expected features. The application does not have to provide extra data or make choices about possible setups.

This application relates to the use of features based on landmarks of an avatar model. For example, a feature may include the prediction of landmark coordinates of a user captured by a webcam. An animation of an avatar model may mimic the facial expressions of the user based on a transposition of the landmarks coordinates.

For some embodiments, the following signaling must be specified: the avatar model and one or more landmark sets of the avatar model. Furthermore, for each landmark set, signaling should include the landmark set semantic type and the landmark set description, and for each landmark, signaling should include the landmark semantic type, and the landmark description.

Each landmark is defined given a topology and is signaled using a vertex index or a face index with three barycenter coordinate weights. If the avatar model has several sub-models, like level of detail (LOD), and thus, several possible topologies, signaling of the landmark sets in each case must be possible.

The landmark set semantic type is not related to 3D coordinates or topology location (like indices). The landmark set uses a formal definition, like "academic:facial:68" or "mpeg:avatar:2024:77". These types may be defined by an application or a standard, for instance.

For instance, a landmark set description may be used in user interfaces to help the user understand which landmark set is being used.

The landmark semantic type is not related to 3D coordinates or topology location (like indices). The landmark semantic type uses a formal definition, like "the top of the nose". These types may be defined by an application or a standard, for instance.

For instance, a landmark description may be used in user interfaces to help the user understand which landmark is being used.

Because individual landmarks may be defined for some embodiments with reference to an avatar mesh (either to a vertex of the avatar mesh or to a position on a face of the avatar mesh), such landmarks may move and flow with the avatar as the avatar is adapted or animated. In some embodiments, landmark sets may be predefined. In some embodiments, landmark sets are signaled between devices. In some embodiments, several landmark sets may be signaled. For some embodiments, a description and a type may be signaled for each landmark set. For some embodiments, a "stitching" to the mesh, a type, and a description may be signaled for each landmark. For some embodiments, a stitching may include a vertex index, a face index, and/or a set of barycenter weights.

Some embodiments may use AJIF or glTF. Other embodiments may use other scene description formats, such as USD or FBX, among others.

### Signaling with AJIF

The Avatar Json Interchange File Format (AJIF) format was introduced with the '094 application.

### Levels of Detail (LCD)

Table 1 shows the AJIF LOD properties with the "landmarkSets" property added. A matching of properties between the avatar model of each LOD with the physical model may be signaled through the new "landmarkSets" property that is added to the LOD properties:

**Table 1.**

| **Name** | **Type** | **Description** | **Required** |
|---|---|---|---|
| name | string | LOD name. | No |
| lod | integer | Indicates the level of details. Lower values correspond to higher level of details. | No, default 0 |
| mesh | integer | References a node in the "nodes" collection. | No |
| skeletons | integer[1-*] | List of references to skeletons in the *"skeletons"* collection. | No |
| controllers | integer[1-*] | List of references to controllers in the *"controllers"* collection. | No |
| landmarkSets | LandmarkSet[1-*] | List of landmark sets for the mesh of this LOD. | No |

The "landmarkSets" property contains the list of landmark sets for the mesh of the LOD. See the description of *LandmarkSet* below.

In the landmark definitions, the vertex or face indices are the ones of the mesh defined through the "mesh" property of the LOD. The vertices and faces of this mesh are the result of the concatenation of all vertices and faces found during a depth-first traversal that starts with the node referenced by the "mesh" property of the LOD.

### Signaling with glTF

In the current description, the format follows the glTF format and is compatible with the recent MPEG-I SD standard.

### MPEG_node_avatar

Table 2 shows the MPEG_node_avatar property with the "landmarkSets" property added. The existing MPEG_node_avatar extension is further extended by this addition. See the reference *Information Technology Coded Representation of Immersive Media Part 14: Scene Description,* ISO/IEC 23090-14:2023 (E), ISO/IEC (2023).

**Table 2.**

| **Name** | **Type** | **Description** | **Required** |
|---|---|---|---|
| isAvatar | boolean | If true, this node contains the root of an avatar mesh. | Yes |
| type | string | The type of the Avatar representation is provided as a URN. | Yes |
| mappings | AvatarMapping[1-*] | The mapping between child nodes and semantics. | Yes |
| landmarkSets | LandmarkSet[1-*] | List of landmark sets for the mesh of this avatar node. | No |

The "landmarkSets" property contains the list of landmark sets for the mesh of the node. See the description of *LandmarkSet* below.

In the landmark definitions, the vertex or face indices are the ones of the mesh defined through the avatar node. The vertices and faces of this mesh are the result of the concatenation of all vertices and faces found during a depth-first traversal that starts with the avatar node.

### LandmarkSet

Table 3 shows a definition of the *LandmarkSet* property.

**Table 3.**

| **Name** | **Type** | **Description** | **Required** |
|---|---|---|---|
| name | string | Landmark set name. | No |
| description | string | Landmark set description. | No |
| type | string | Landmark set type. | Yes |
| landmarks | Landmark[1-*] | List of landmarks. | Yes |

The "name" property defines the name of the landmark set. The "name" property may be used for indexing, e.g., to retrieve the landmark set knowing its name.

The "description" property describes the landmark set. For instance, a description may be used in user interfaces to help the user understand which landmark set is being used.

The "type" property defines the landmark set semantic type. The landmark set semantic type is not related to 3D coordinates or topology location (like indices). Also, the landmark set uses a formal definition, like "academic:facial:68" or "mpeg:avatar:2024:77". These types may be defined by an application or a standard, for instance. In most cases, a landmark set type also defines the type of each landmark in the set. A special value, like "specific", may be used to define a non-standard landmark set type. In this case, the "type" property of each landmark in "landmarks" must be defined.

The "landmarks" property contains the list of landmark definitions in the set. The size of this list must be consistent with the type. For instance, if the landmark set type has 68 landmarks, the "landmarks" list must contain 68 items.

### Landmark

Table 4 shows a definition of the *Landmark* property.

**Table 4.**

| **Name** | **Type** | **Description** | **Required** |
|---|---|---|---|
| name | string | Landmark name. | No |
| description | string | Landmark description. | No |
| type | string | Landmark type. | No |
| vertex | integer | Vertex index. | No |
| face | integer | Face index. | No |
| weights | number[1-*] | Barycentric coordinates of the vertex within the face for the associated landmark. | No |

The "name" property defines the name of the landmark. The "name" property may be used for indexing, e.g., to retrieve the landmark knowing its name.

The "description" property describes the landmark. For instance, a description may be used in user interfaces to help the user understand which landmark is being used.

The "type" property defines the landmark semantic type. The landmark set semantic type is not related to 3D coordinates or topology location (like indices). The landmark set uses a formal definition, like "the top of the nose" or "mpeg:avatar:landmark:nose:top". This property is mandatory if the landmark is within a landmark set with no definitions, like the example of "specific" landmark set type presented in the previous section. This property also may be used to override the landmark types of a landmark set type.

The "vertex" property defines the vertex index of the landmark. If the "vertex" property is present, the "face" and "weights" properties must not be present and vice versa.

The "face" and "weights" properties define a point on a mesh. The "face" property is the index of a face (like a triangle). The "weights" property indicates the barycentric coordinates of the point in the face it lies in, i.e. the barycentric weights associated with each edge of the face. Both properties together must be either present or not present. If the "face" and "weights" properties are present, then the "vertex" property must not be present.

### AJIF Example

Code Listing 1 shows an example code listing for encoding an avatar using the AJIF format.

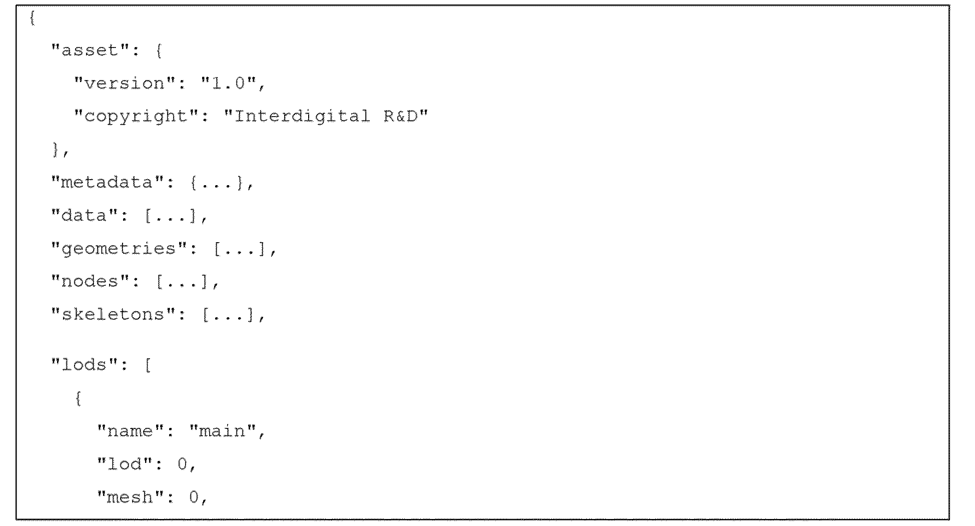

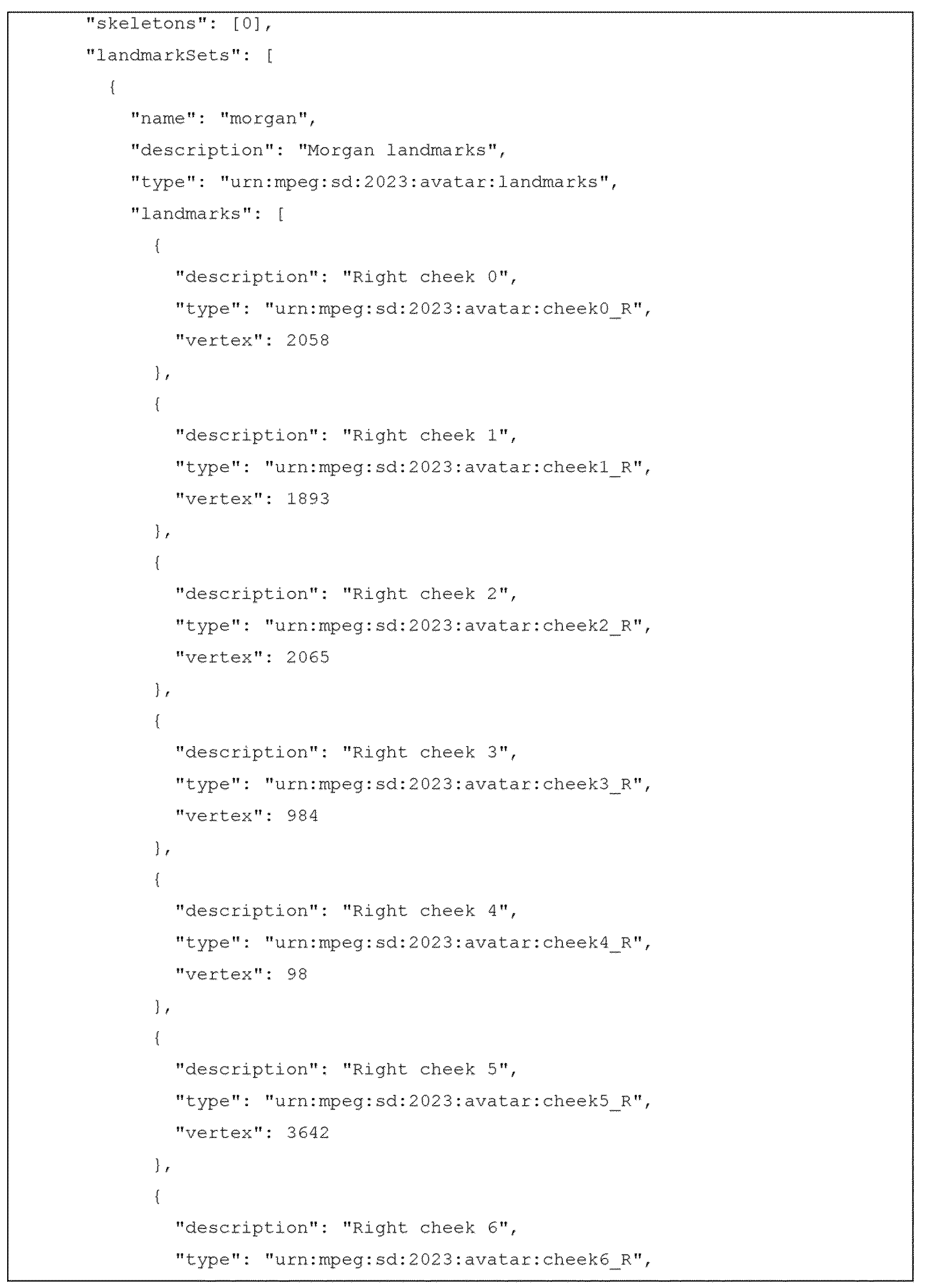

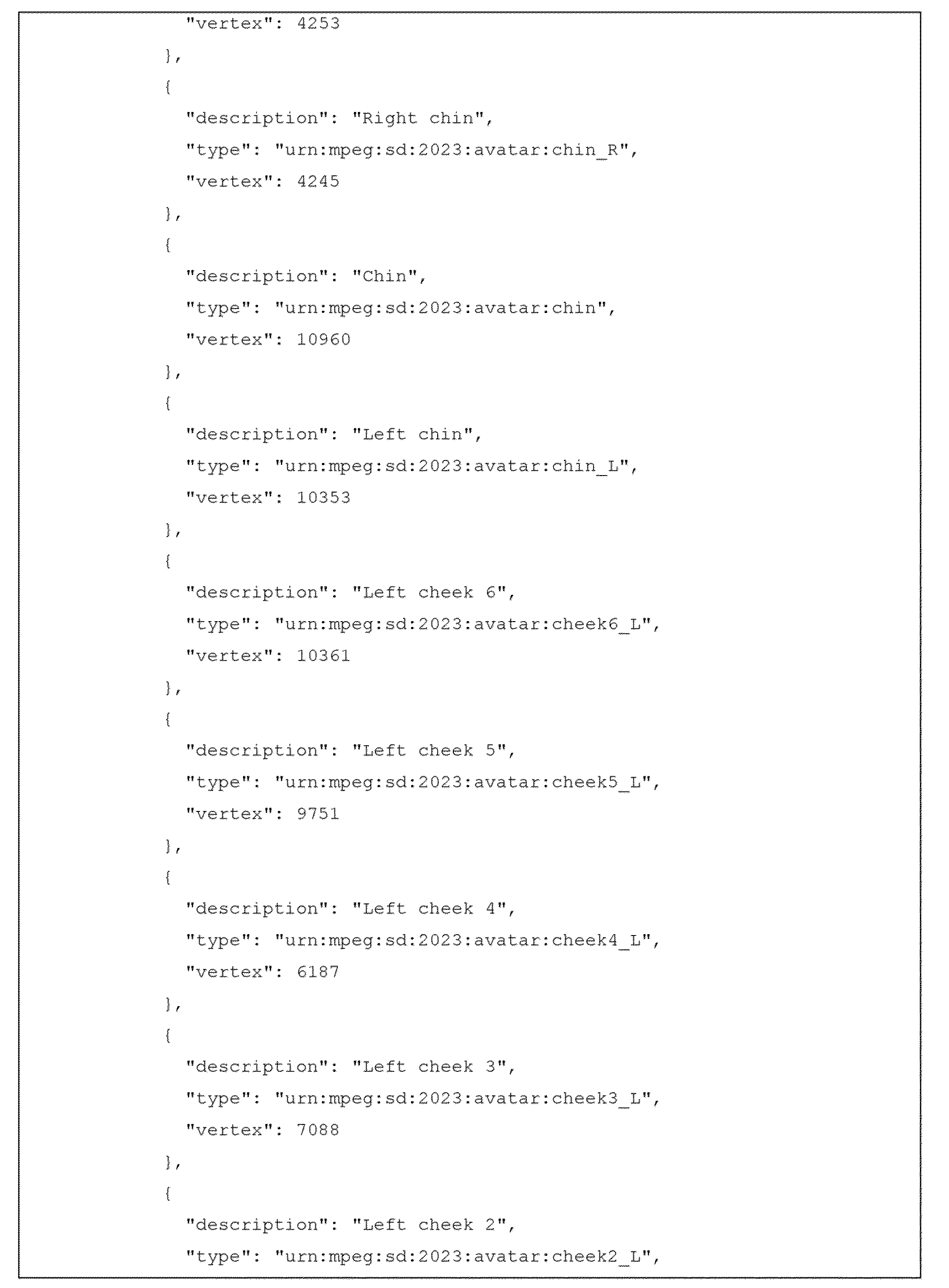

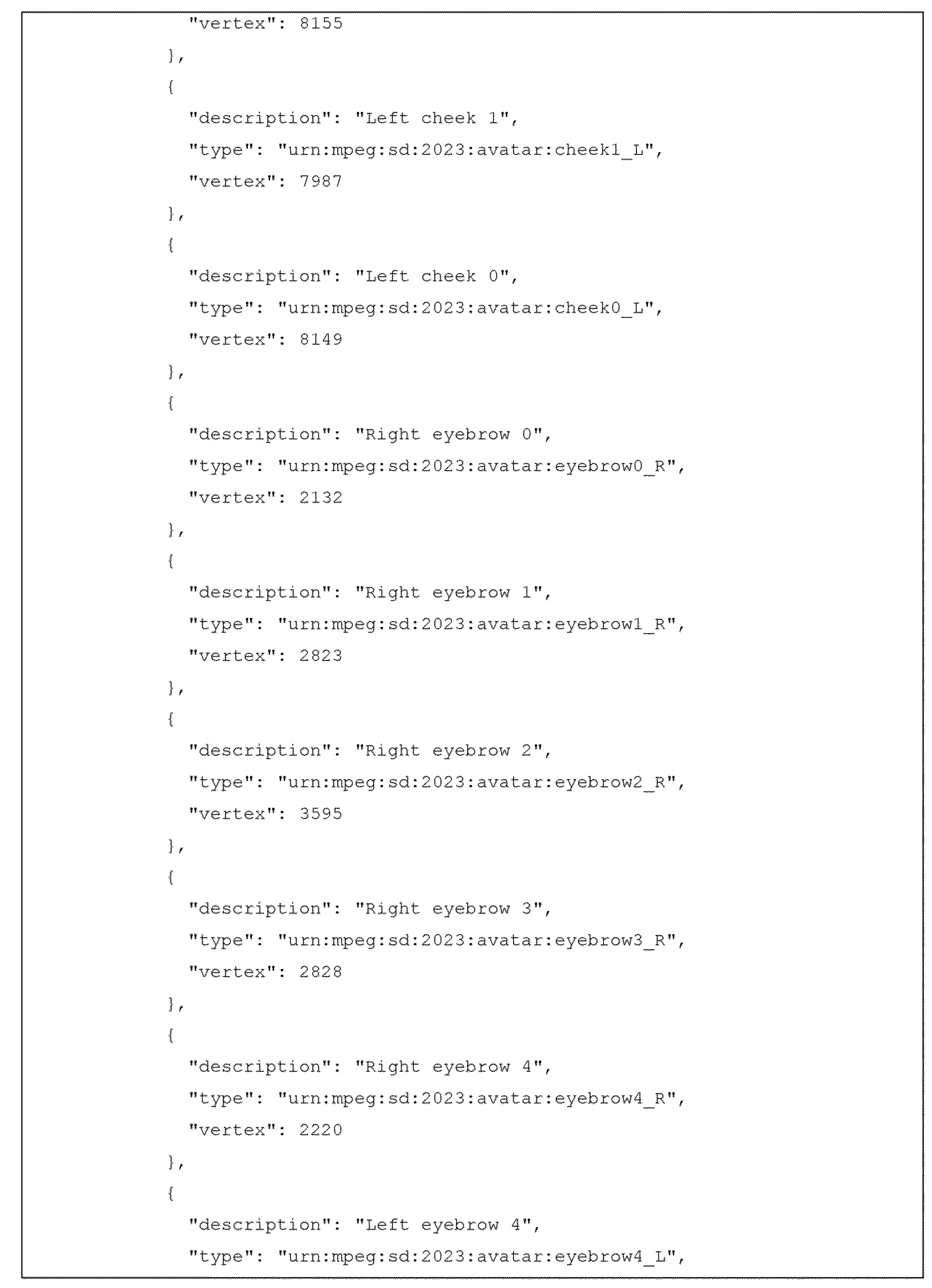

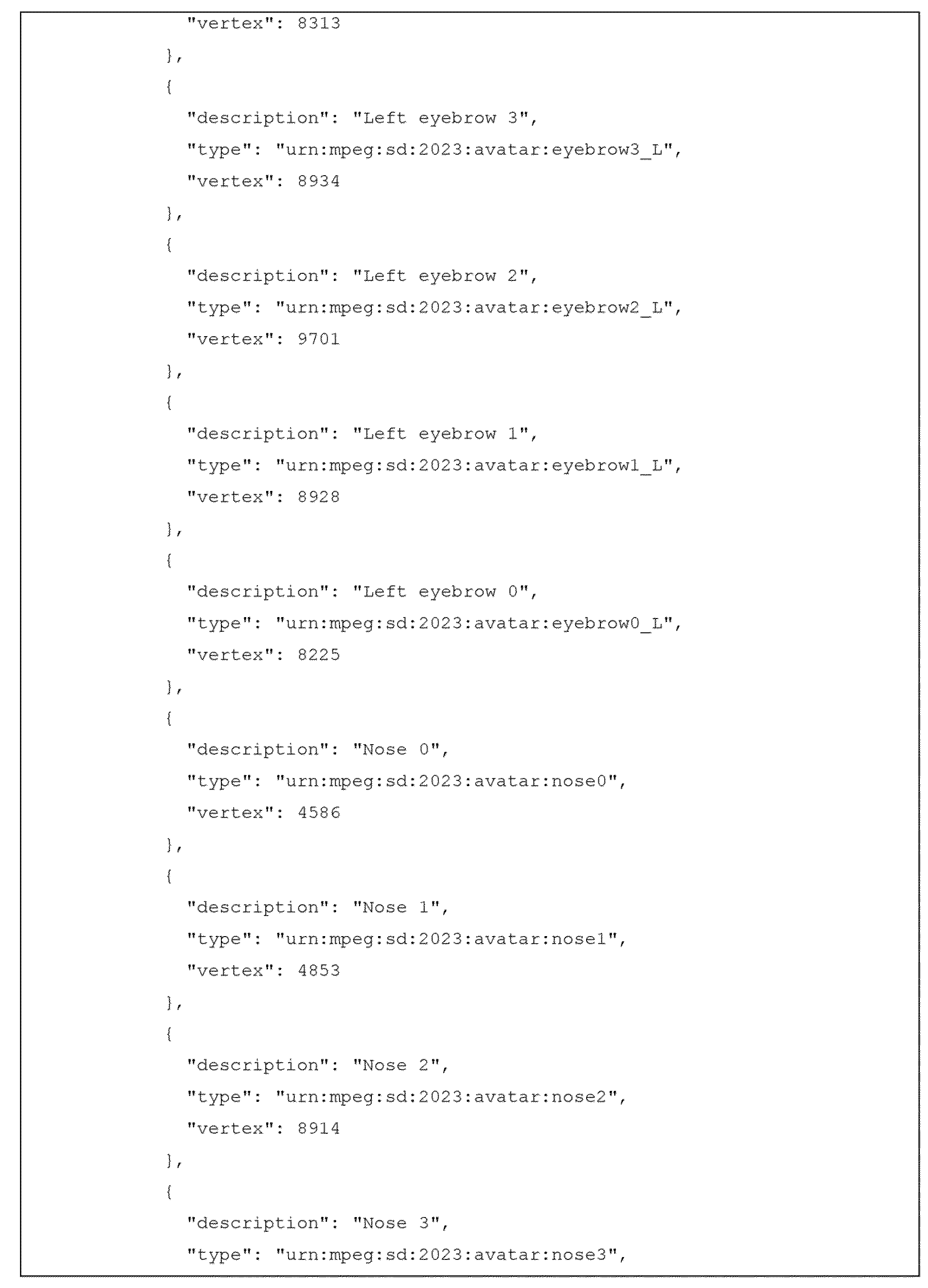

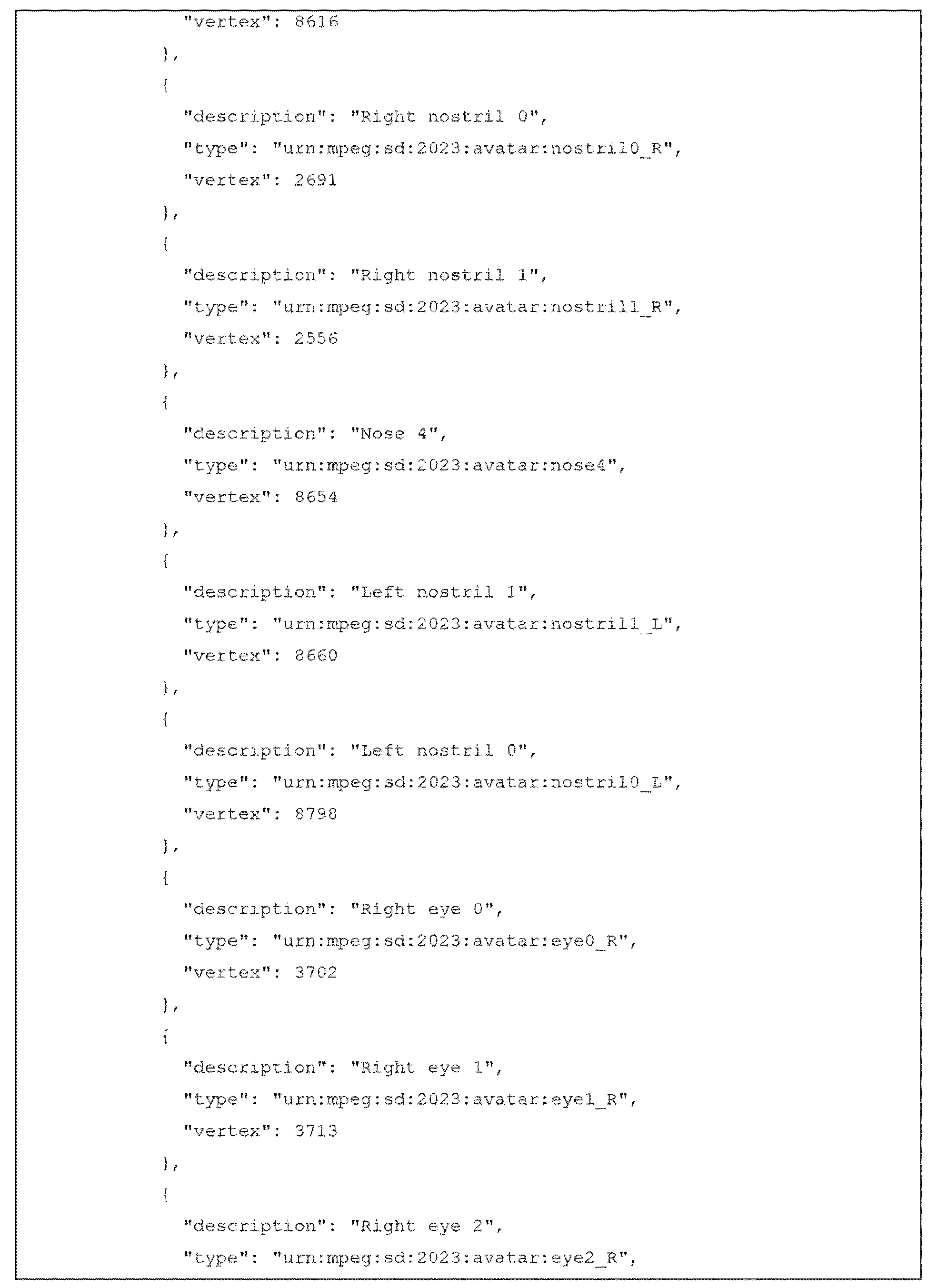

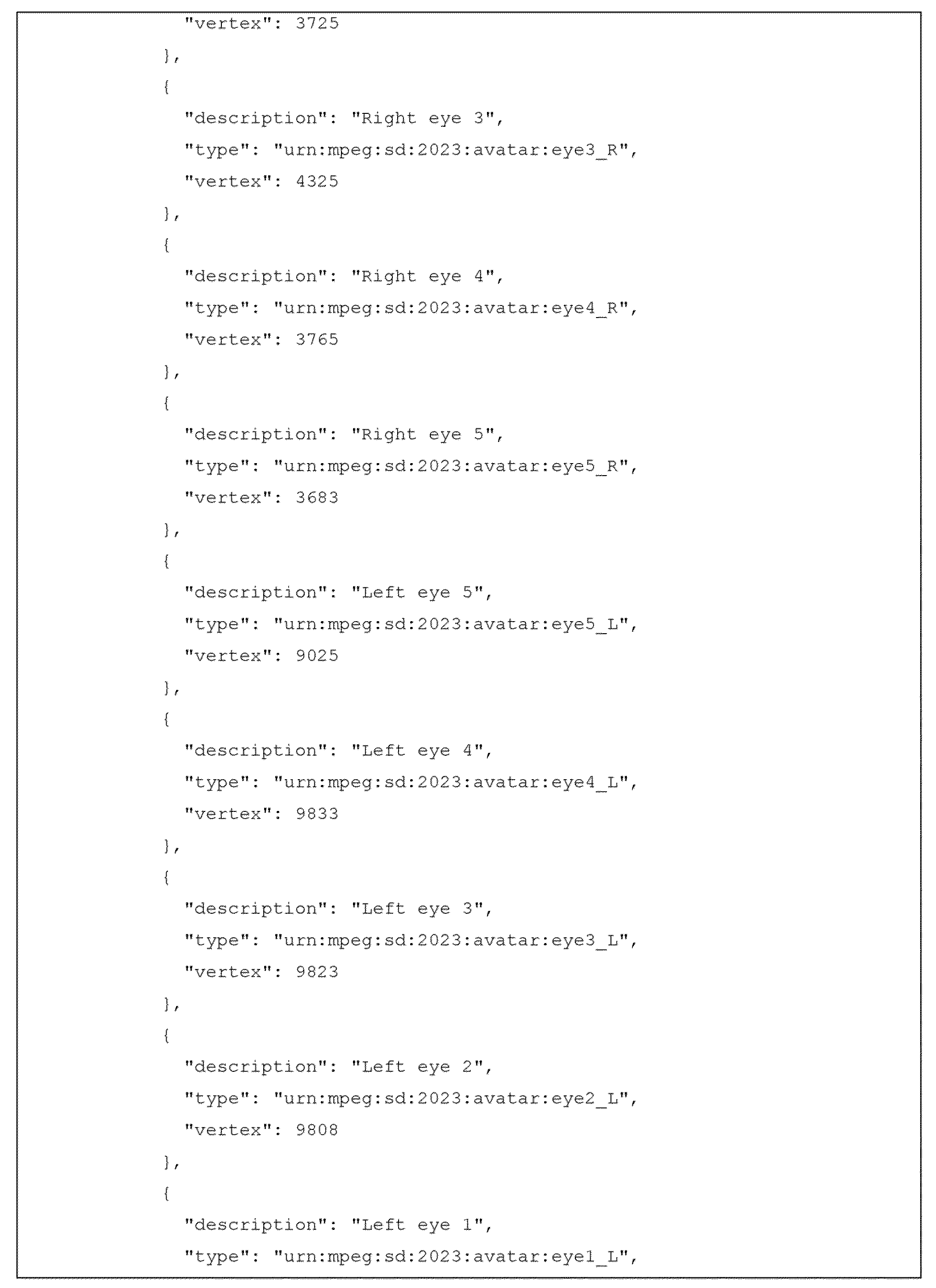

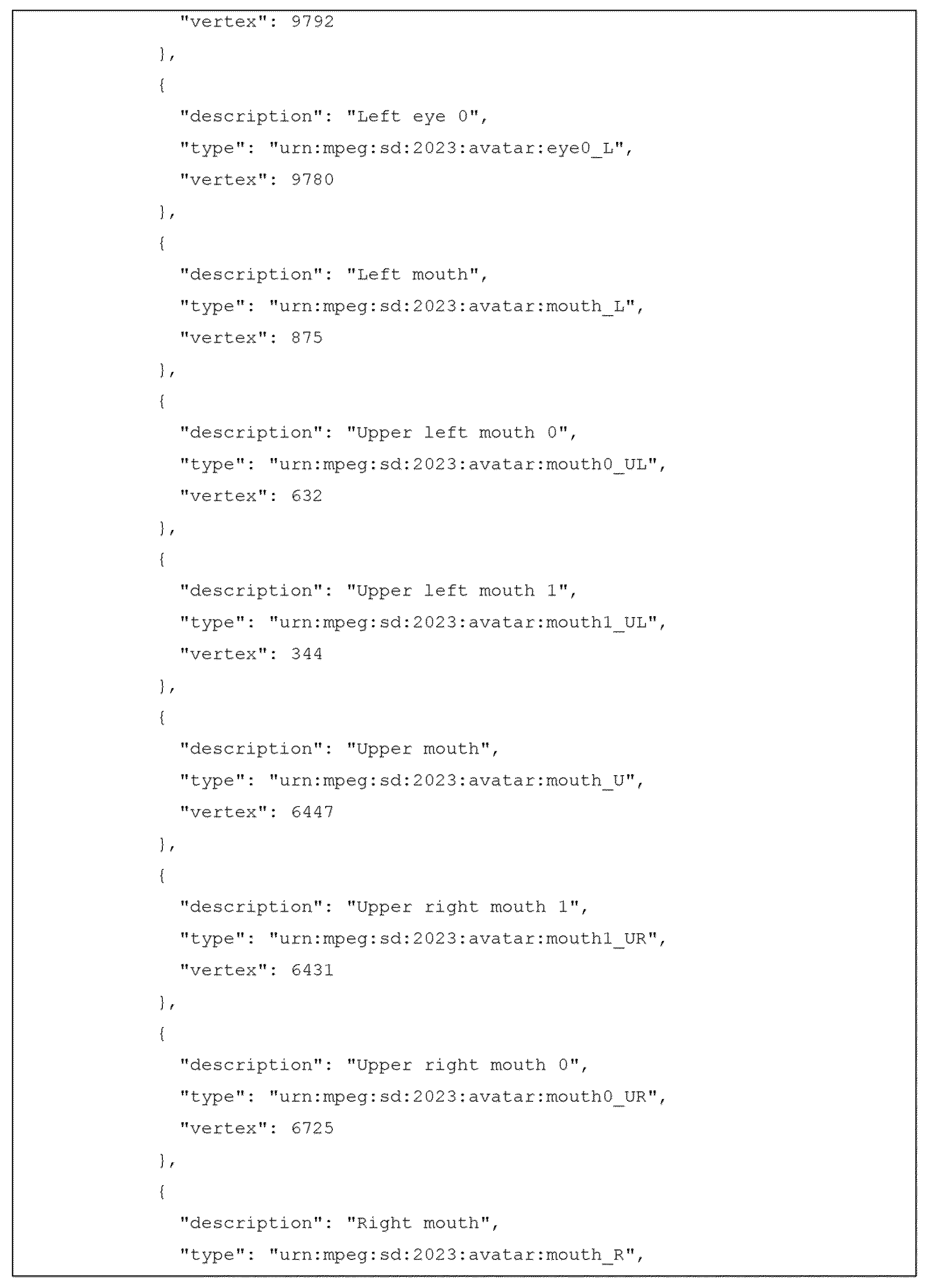

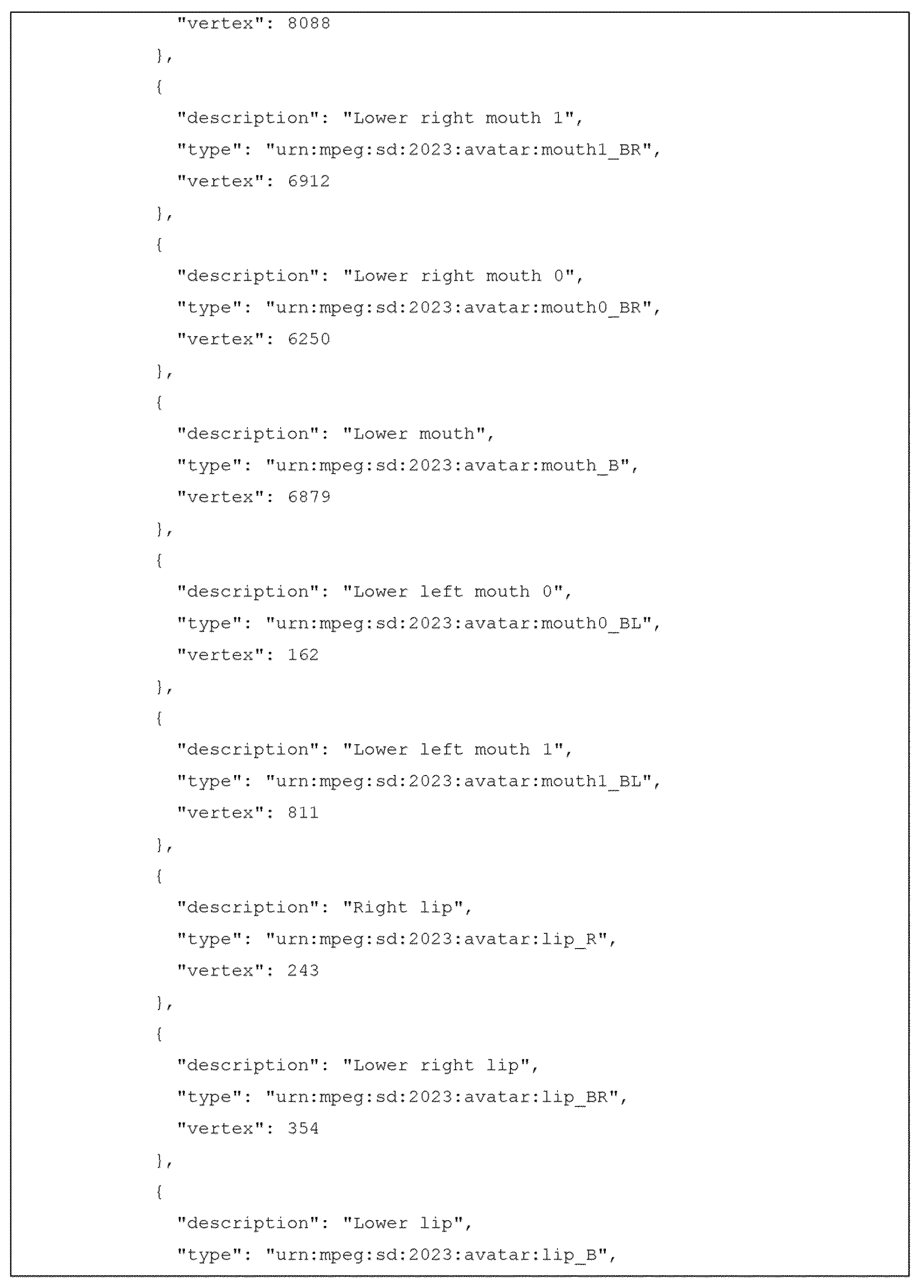

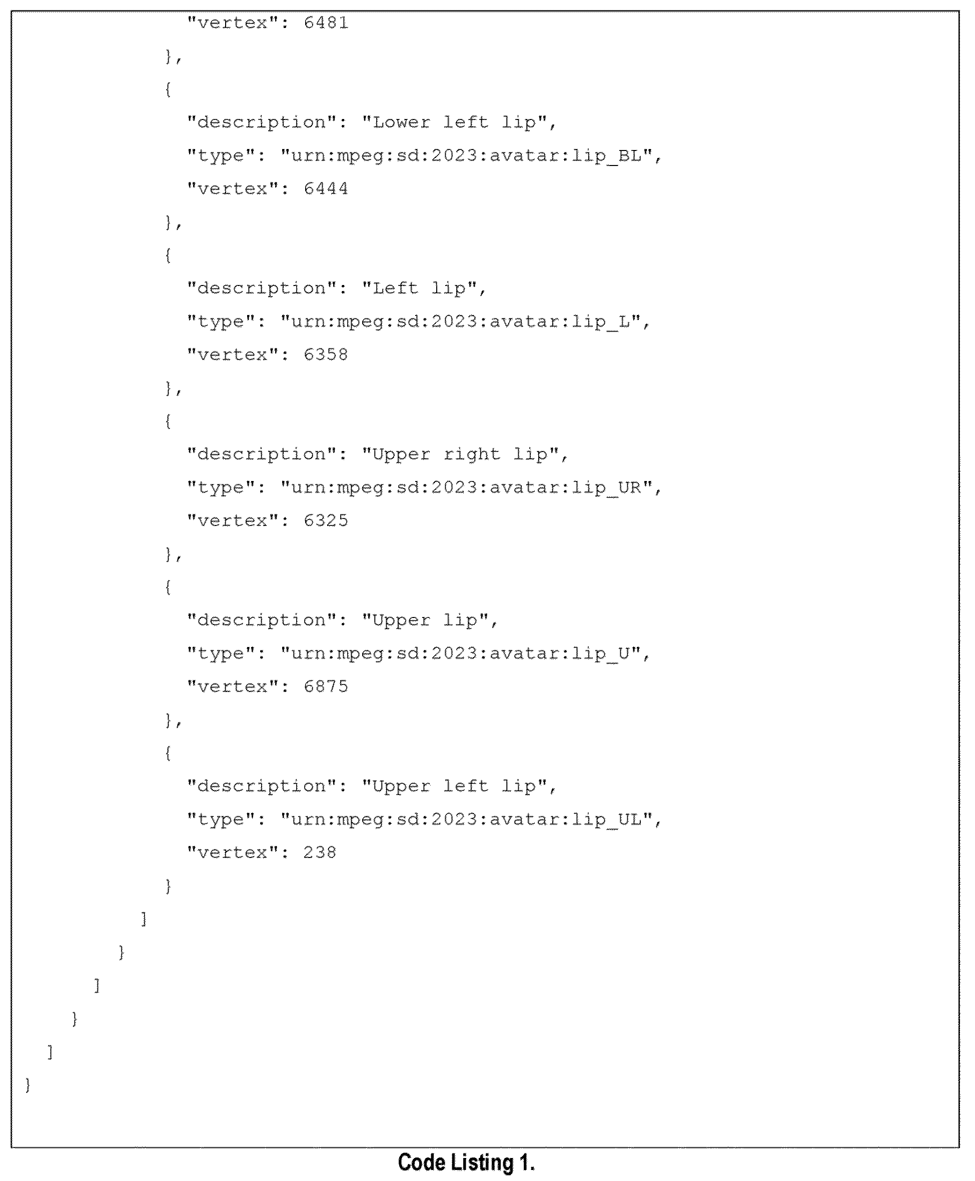

### Code Listing 1.

All content parsed is defined in the '094 application, except for the first item of the "lods" root property. For the "lods" root property, the "name", "lod", "mesh", and "skeletons" fields are parsed as usual. The "landmarkSets" property is parsed and contains a single landmark set for this example. The name of this set is "morgan" because the "name" property is equal to "morgan". The description is "Morgan landmarks" because the "description" property is equal to "Morgan landmarks". The "type" is "urn:mpeg:sd:2023:avatar:landmarks" because the "type" property is equal to "urn:mpeg:sd:2023:avatar:landmarks". The resource "urn:mpeg:sd:2023:avatar:landmarks" is assumed to define the landmark sets for the MPEG Morgan reference avatar. The "landmarks" list contains the definitions of 68 landmarks. For each landmark, its description, type and vertex index are specified.

### gITF Example

Code Listing 2 shows an example code listing for encoding an avatar using the gITF format.

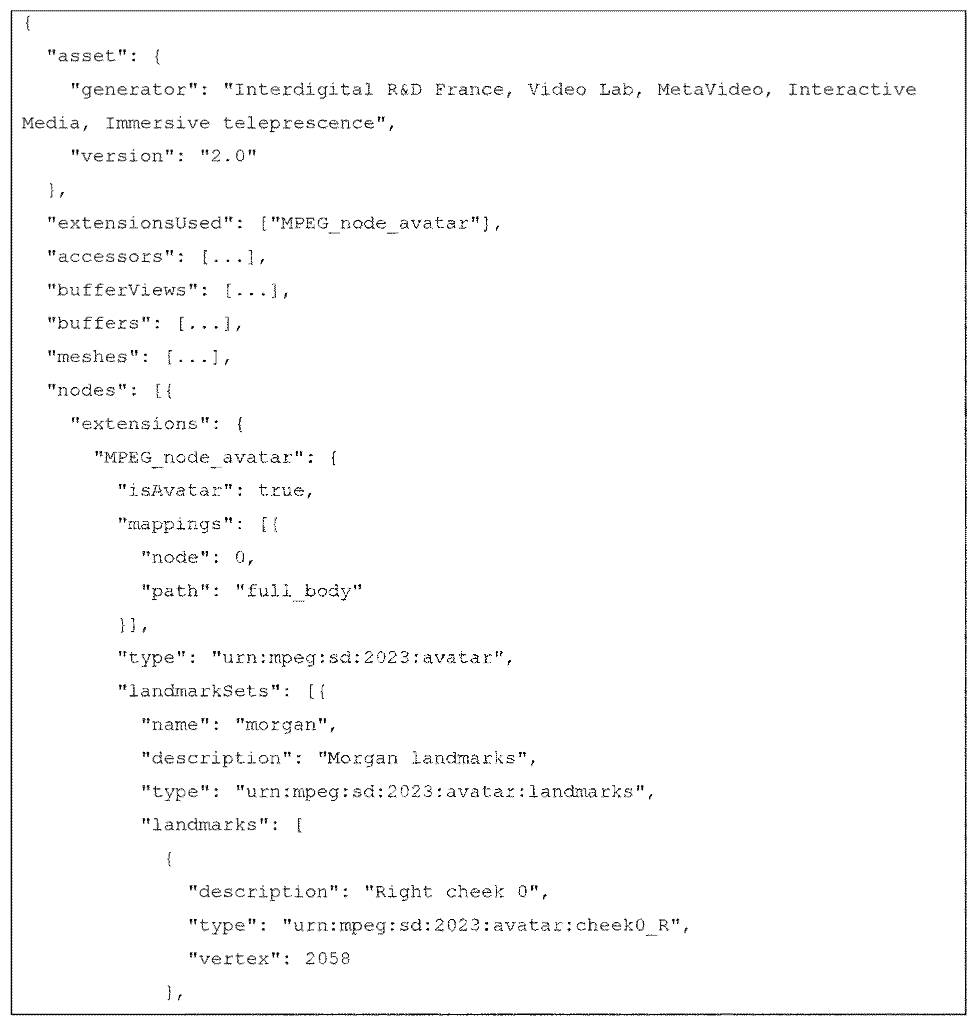

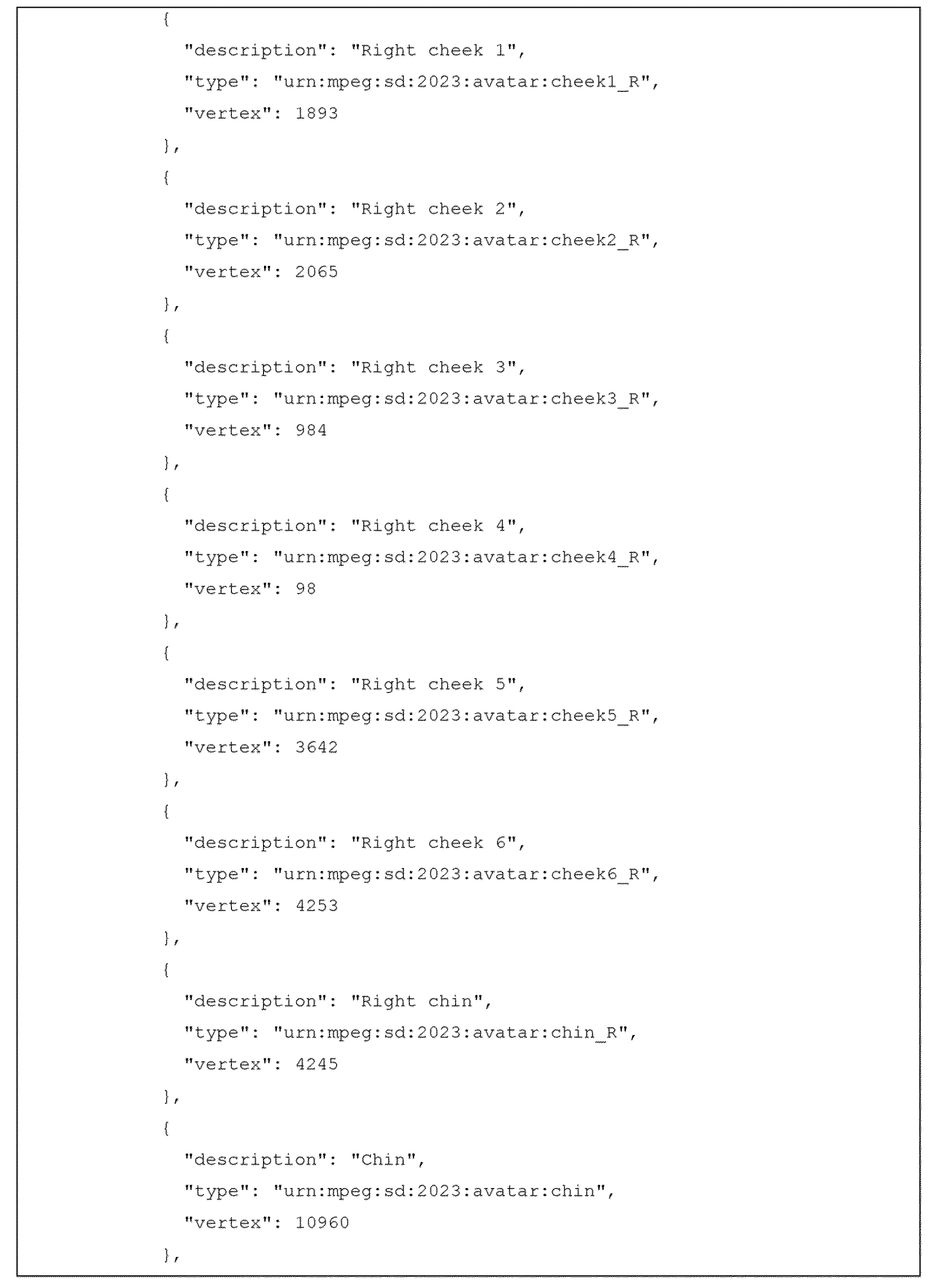

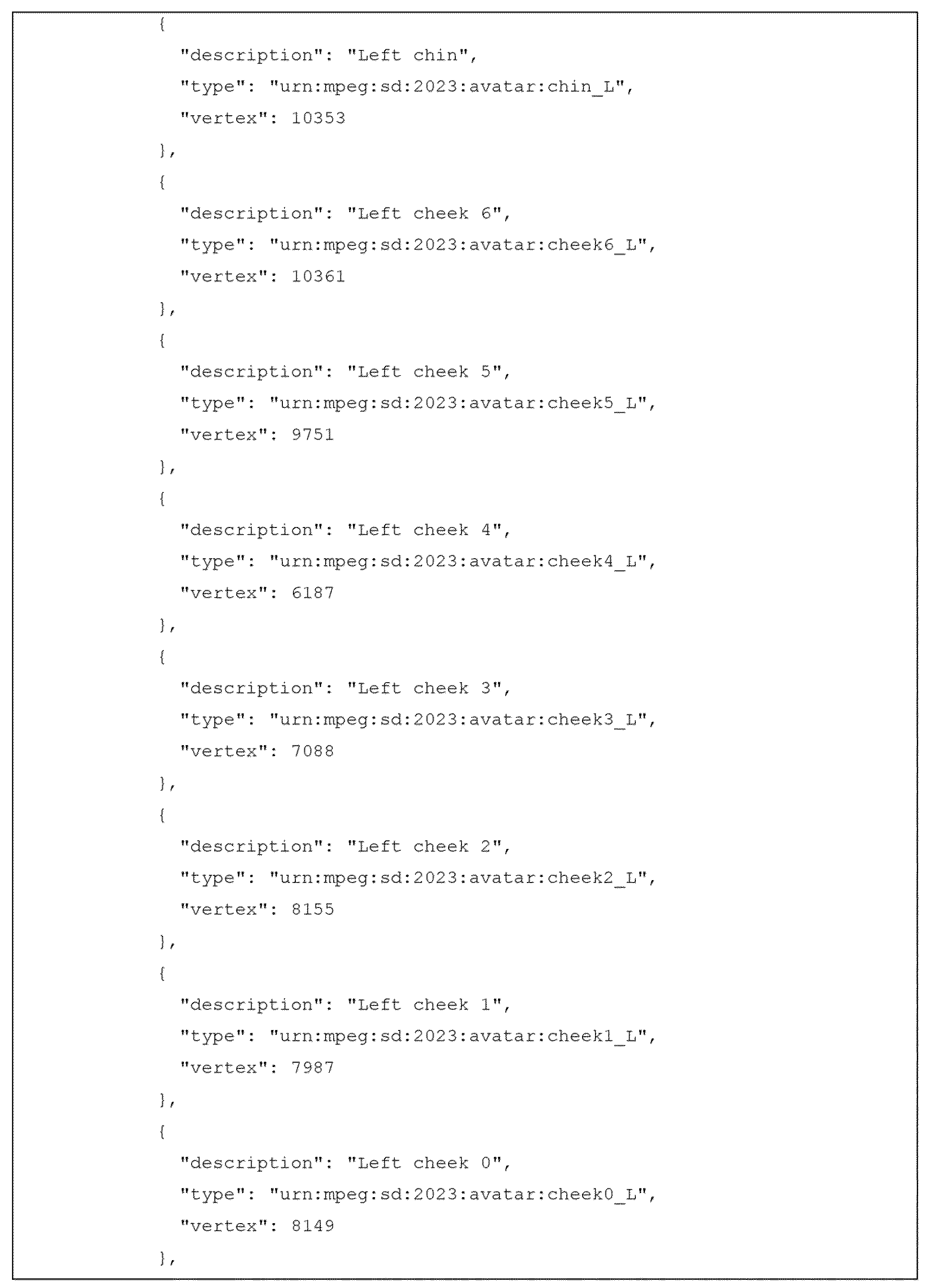

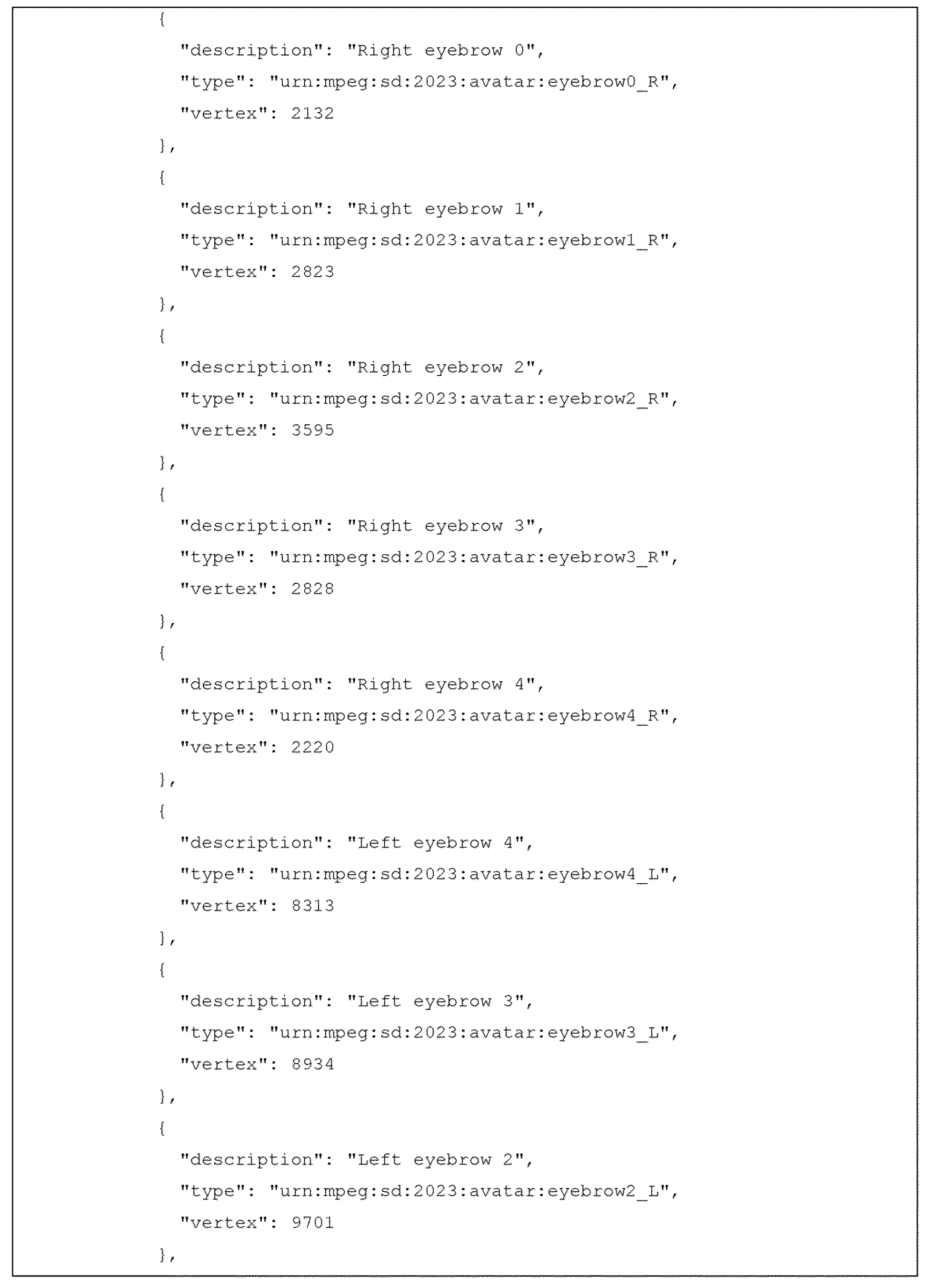

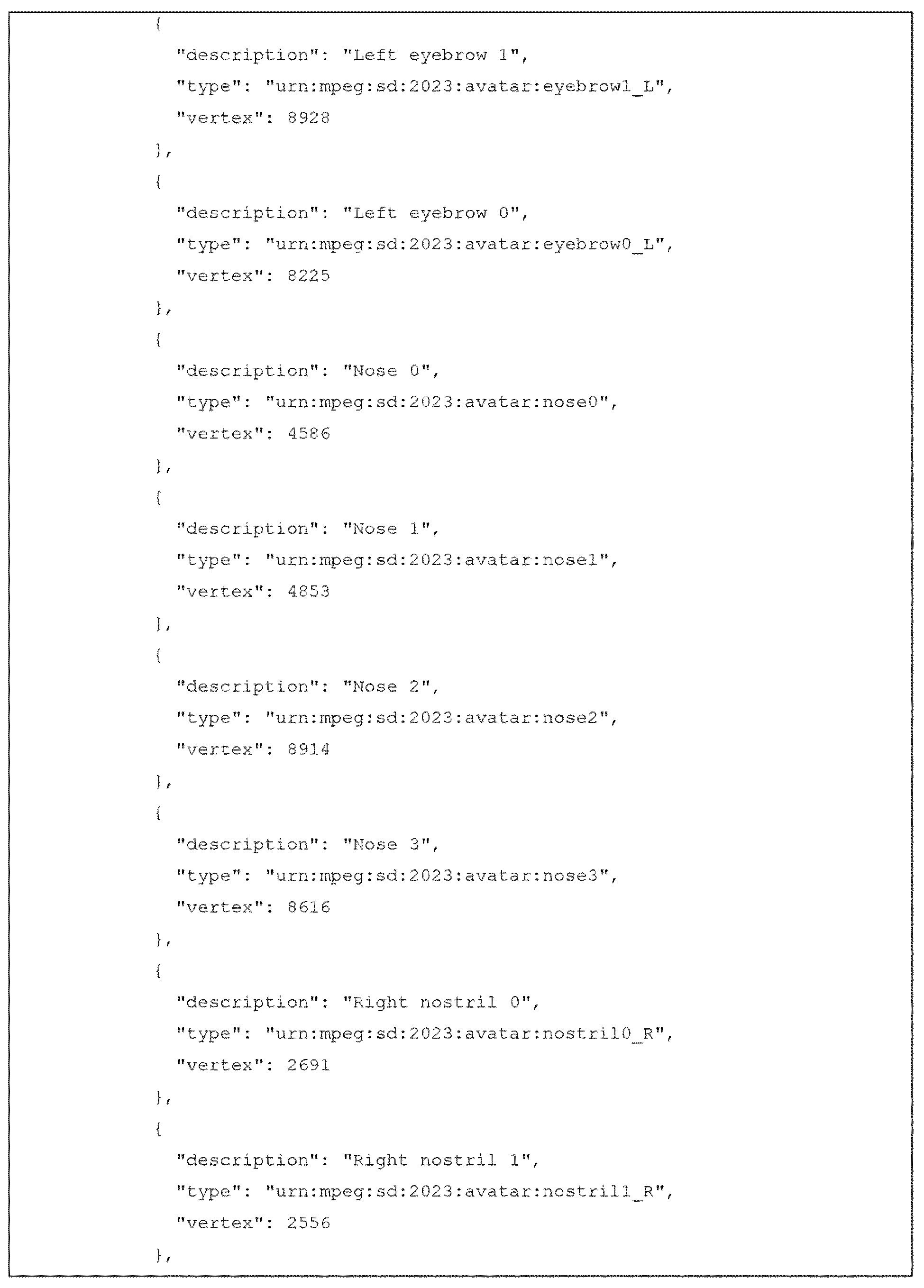

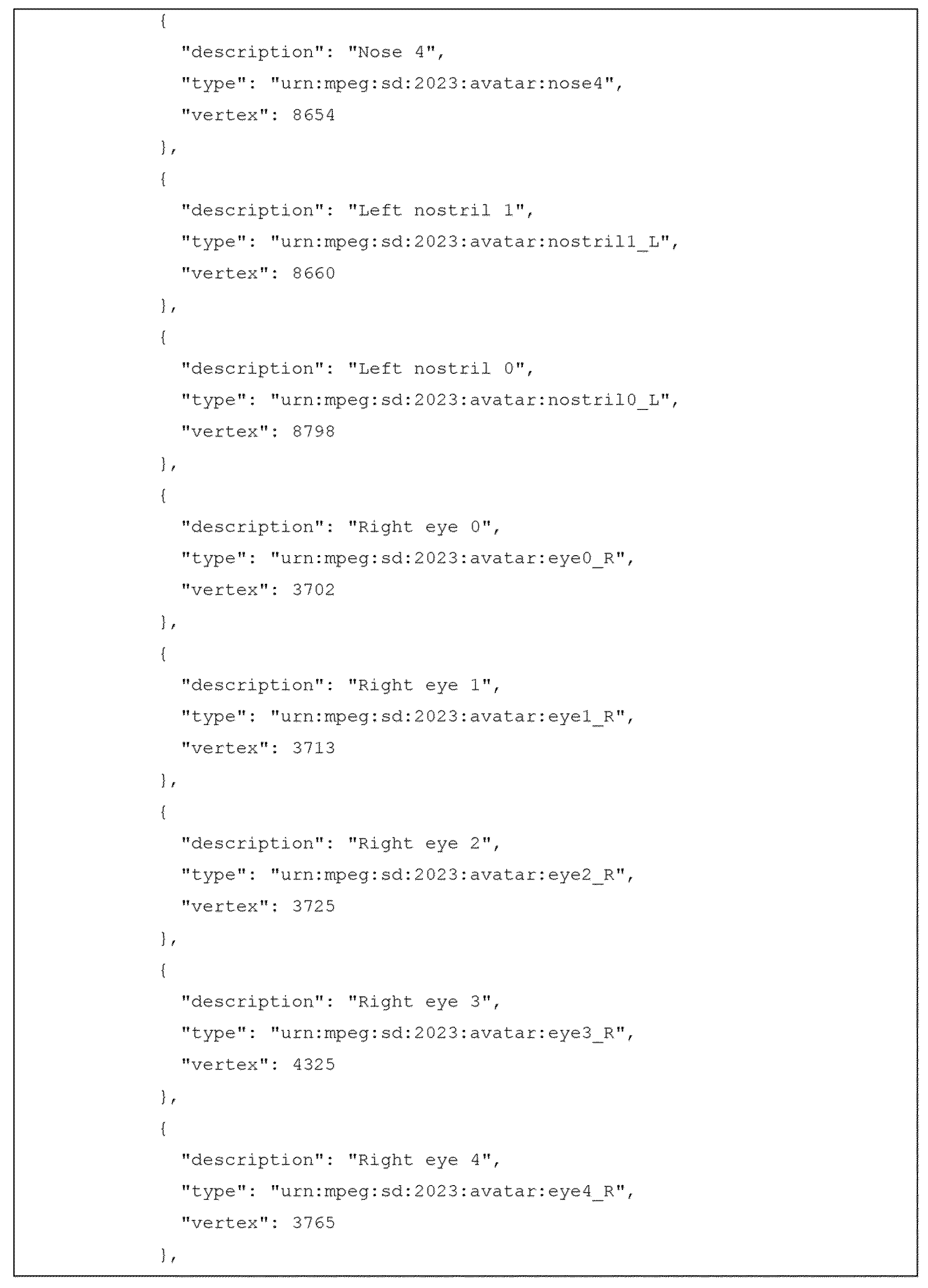

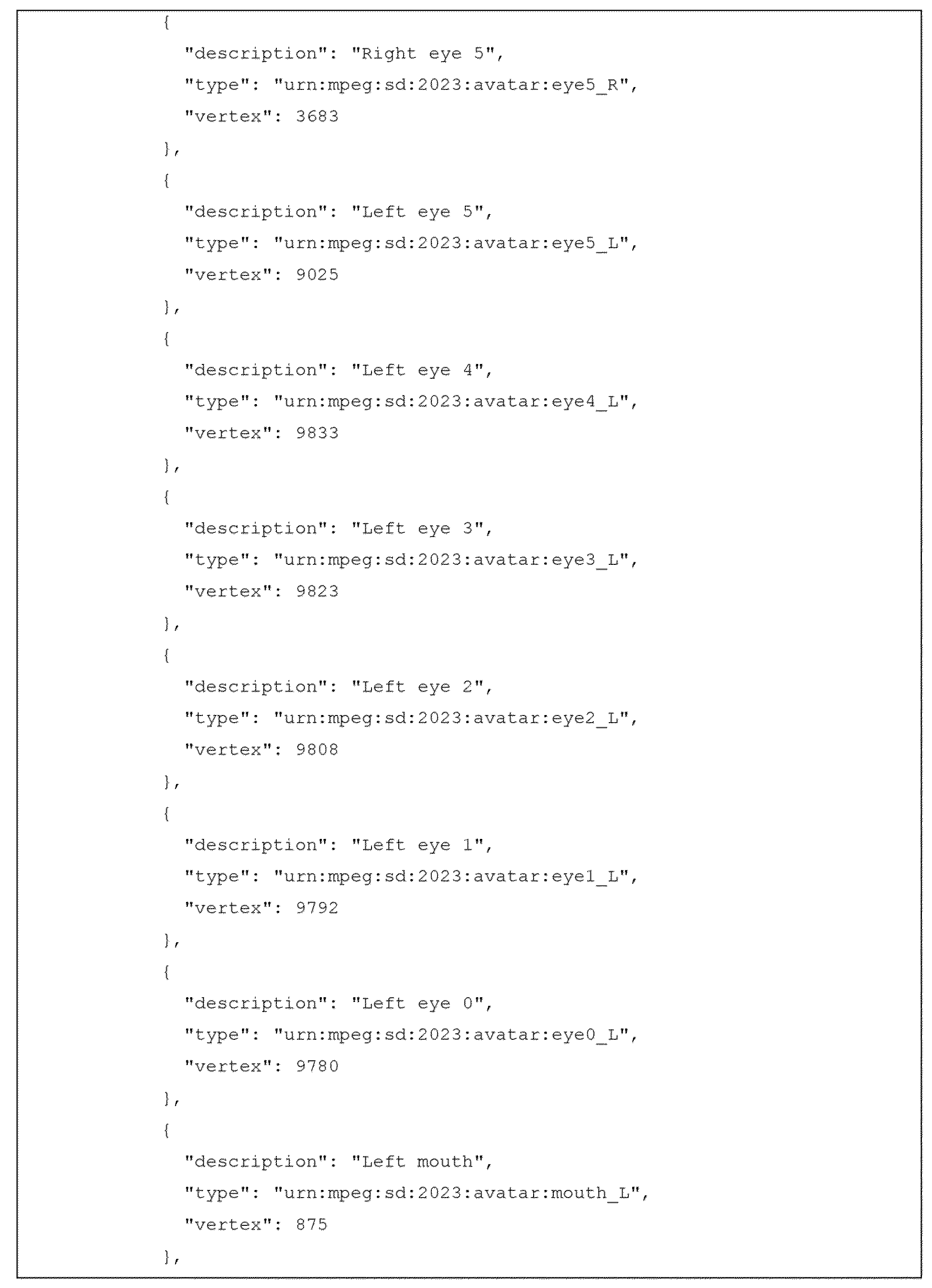

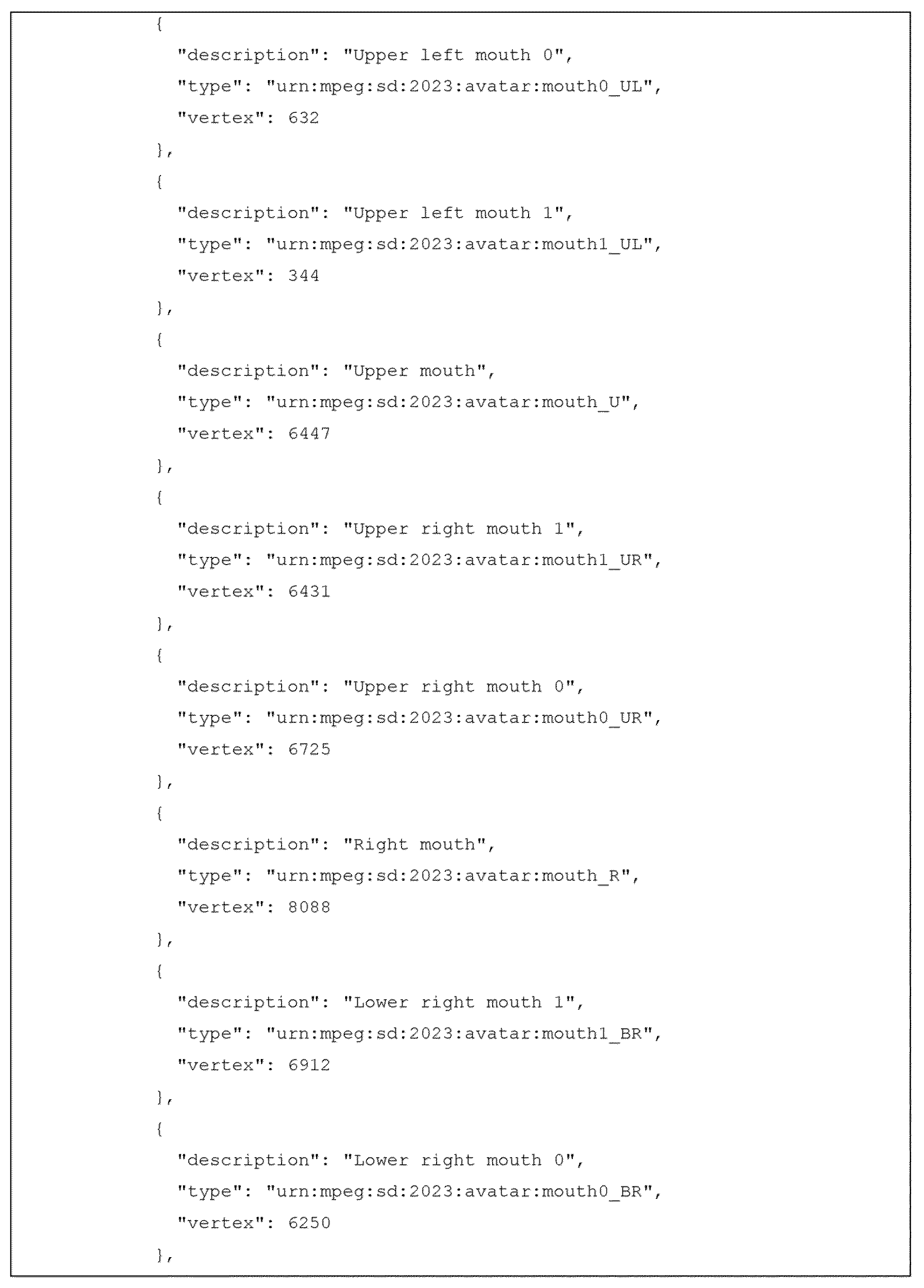

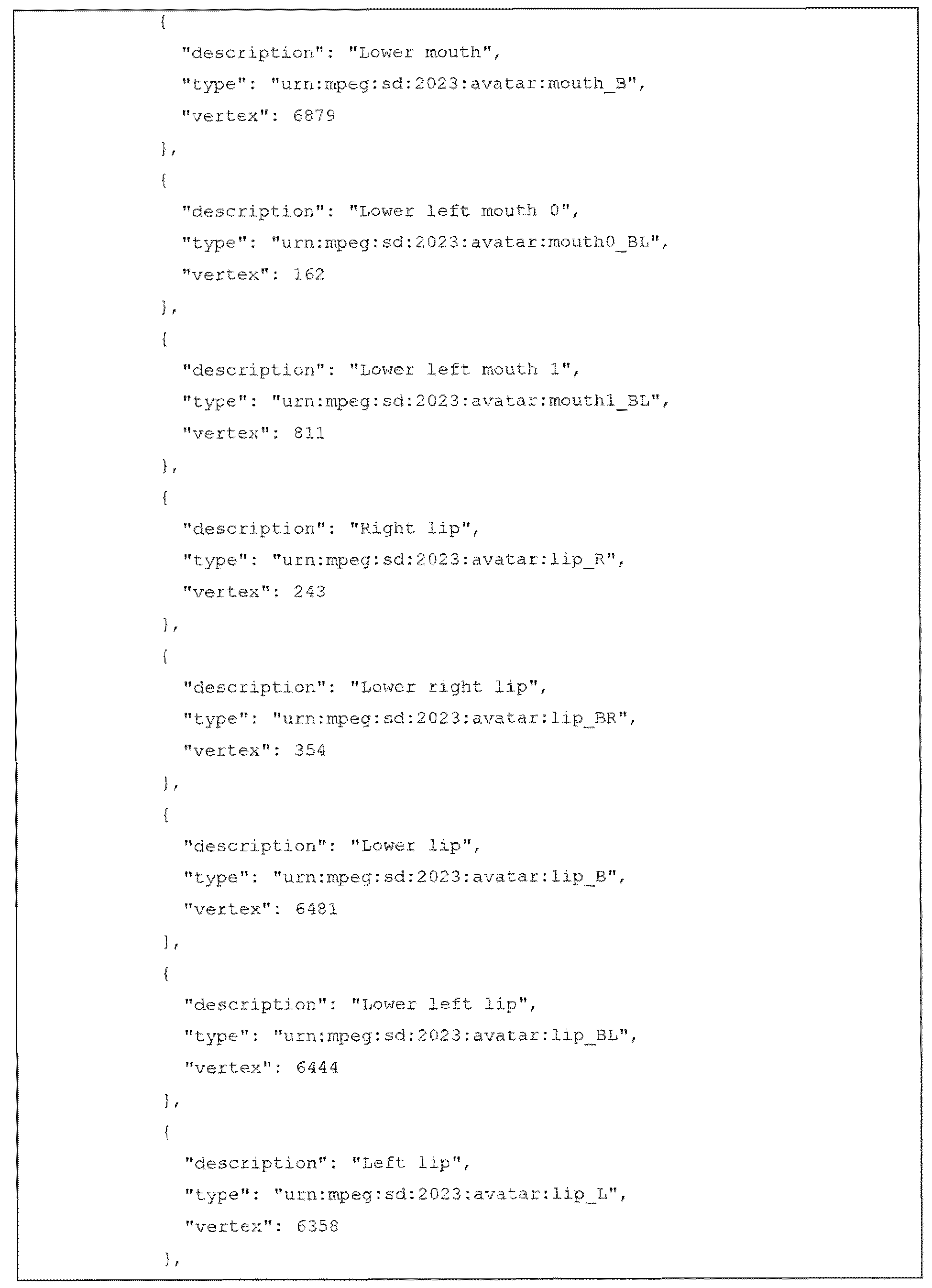

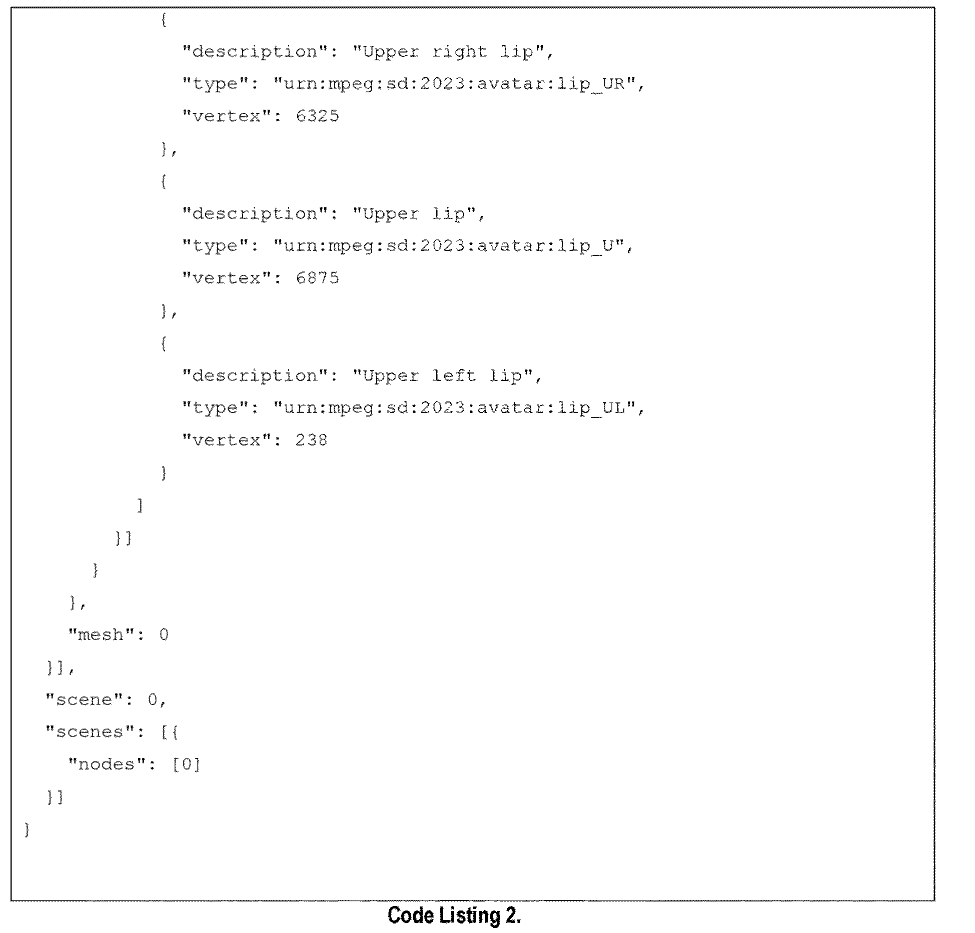

### Code Listing 2.

The glTF parser first loads all content except for the MPEG_node_avatar extension. Then, the glTF parser decodes the MPEG_node_avatar content found in the first node. The code listing indicates that the node is an avatar ("isAvatar" is true). The code listing also indicates that the type is the standard one ("type" is "urn:mpeg:sd:2023:avatar"). Furthermore, the code listing indicates that there is one part, which is the full body. The "path" sub-property under the "mappings" property is set to "full body". The avatar model has a geometry as specified via the "mesh" property, which indicates an index of 0 should be used with the "meshes" array.

Parsing of the "landmarkSets" property reveals that there is a single landmark set. The name of this set is "morgan" because the "name" property is "morgan". The description is "Morgan landmarks" because the "description" property is equal to "Morgan landmarks". The "type" is "urn:mpeg:sd:2023:avatar:landmarks" because the "type" property is equal to "urn:mpeg:sd:2023:avatar:landmarks". The resource "urn:mpeg:sd:2023:avatar:landmarks" is assumed to define the landmark sets for the MPEG Morgan reference avatar. The "landmarks" list contains the definition of 68 landmarks. For each landmark, its description, type, and vertex index are specified.

### Parsing LOD in AJIF

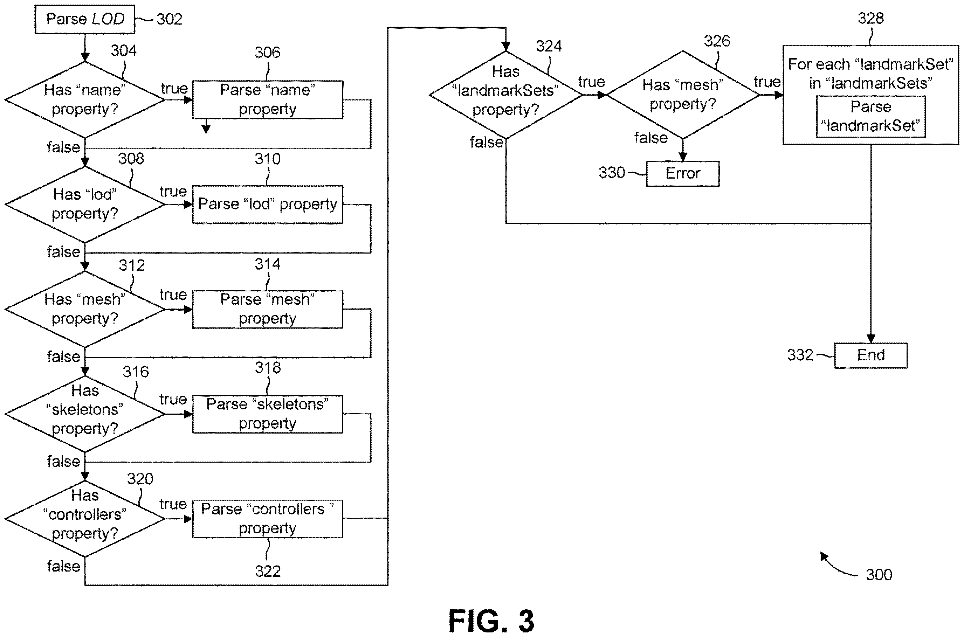

FIG. 3 is a flowchart illustrating an example process for parsing an LOD property according to some embodiments. The example process 300 may be applied for the parsing of an AJIF file format. For some embodiments, a parsing 302 may occur every time a *Level* of *Detail* property is processed in an AJIF file.

A determination 304 is made regarding the existence of the "name" property. If the "name" property exists in the data structure, block 306 parses the "name" property. A determination 308 is made regarding the existence of the "lod" property. If the "lod" property exists in the data structure, block 310 parses the "lod" property. A determination 312 is made regarding the existence of the "mesh" property. If the "mesh" property exists in the data structure, block 314 parses the "mesh" property. A determination 316 is made regarding the existence of the "skeletons" property. If the "skeletons" property exists in the data structure, block 318 parses the "skeletons" property. A determination 320 is made regarding the existence of the "controllers" property. If the "controllers" property exists in the data structure, block 322 parses the "controllers" property.

A determination 324 is made regarding the existence of the "landmarkSets" property. If the "landmarkSets" property exists in the data structure, a determination 326 is made regarding the existence of the "mesh" property. If the "landmarkSets" property does not exist, the example process 300 proceeds to the end box 332. If the "landmarkSets" property exists but the "mesh" property does not exist, then an error 330 is raised. If the "landmarkSets" property and the "mesh" property both exist, then block 328 parses the "landmarkSet" property for each "landmarkSet" property within the "landmarkSets" property. Upon finishing this parsing loop, the example process 300 proceeds to the end box 332. For some embodiments, the result of the data found in the parsing block 328 is stored in a dedicated structure, and the scene is not changed.

### Parsing MPEG_node avatar in glTF

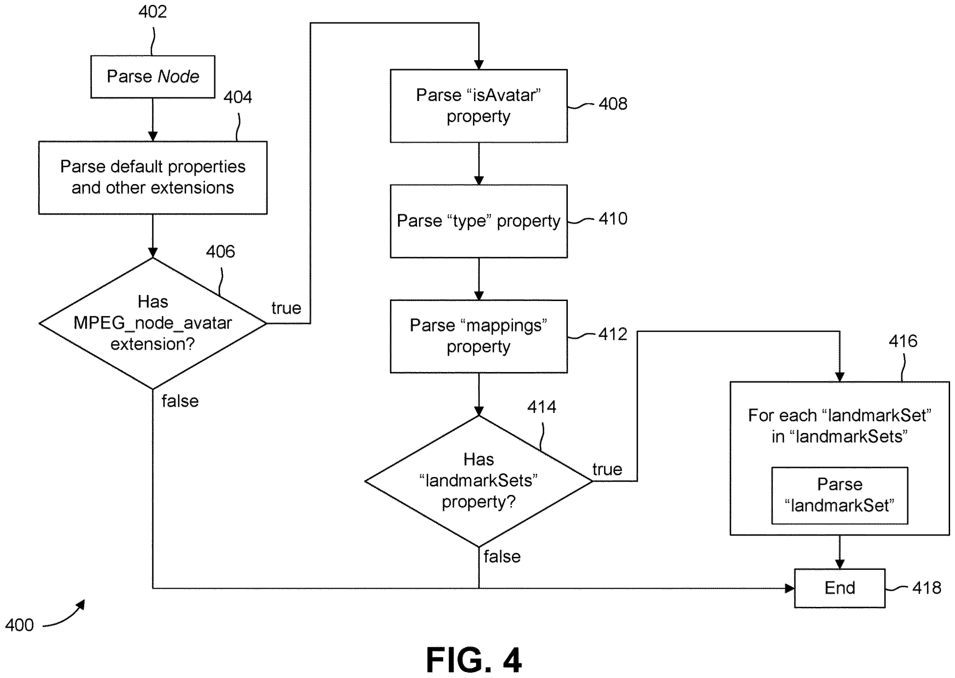

FIG. 4 is a flowchart illustrating an example process for processing a node of a glTF file according to some embodiments. The example process 400 may be applied for the parsing of MPEG_node_avatar property. For some embodiments, a parsing 402 may occur every time a *node* is processed in a glTF file. In block 404, the example glTF loader process 400 decodes the standard properties and other extensions.

A determination 406 is made regarding the existence of the MPEG_node_avatar extension. If the "MPEG_node_avatar extension exists in the data structure, then block 408 parses the "isAvatar" property, block 410 parses the "type" property, and block 412 parses the "mappings" property. A determination 414 is made regarding the existence of the "landmarkSets" property. If the "landmarkSets" property exists, then each "landmarkSet" property in the "landmarkSets" property is parsed 416. After the parsing loop finishes, the example process 400 proceeds to the end box 418.

If either the "MPEG_node_avatar extension or the "landmarkSets" property do not exist in the data structure, then the example process 400 proceeds to the end box 418. For some embodiments, the result of the data found in the MPEG_node_avatar extension is stored in a dedicated structure, and the scene is not changed.

### Parsing LandmarkSet

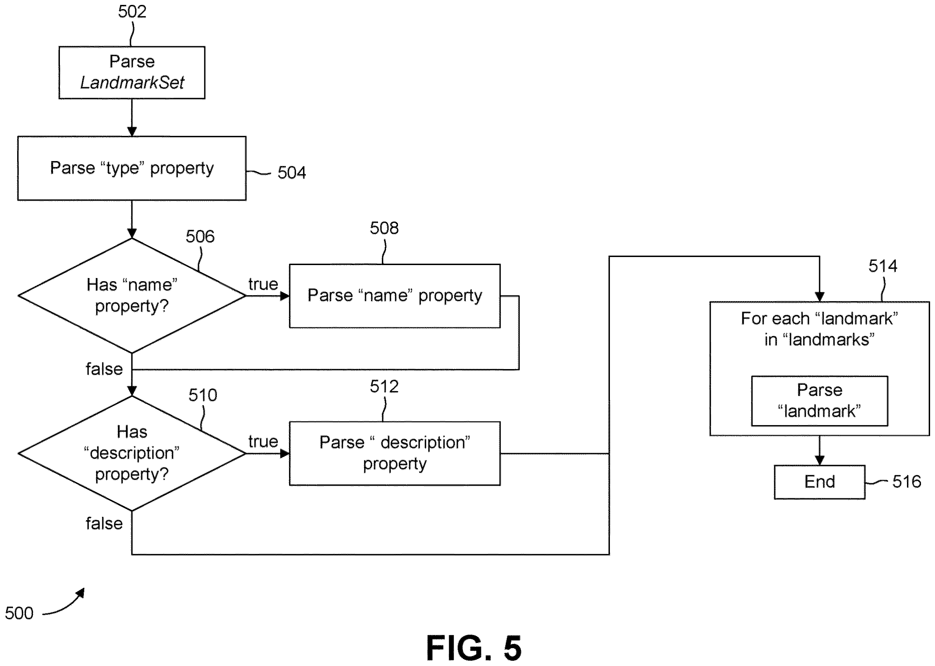

FIG. 5 is a flowchart illustrating an example process for parsing a *LandmarkSet* property according to some embodiments. The example process 500 of FIG. 5 is not specific to gITF, AJIF, or any other particular scene description format. For some embodiments, a parsing 502 may occur every time a *LandmarkSet* property is processed. In box 504, the "type" property is parsed. If the "type" property does not exist, an error may be raised for some embodiments.

A determination 506 is made regarding the existence of the "name" property. If the "name" property exists in the data structure, block 508 parses the "name" property. A determination 510 is made regarding the existence of the "description" property. If the "description" property exists in the data structure, block 512 parses the "description" property.

Block 514 parses the "landmark" property for each "landmark" property within the "landmarks" property. Upon finishing this parsing loop, the example process 500 proceeds to the end box 516. For some embodiments, the result of the data found during this parsing 514 is stored in a dedicated structure, and the scene is not changed. For some embodiments, if the "landmarks" property does not exist, an error may be raised.

### Parsing Landmark

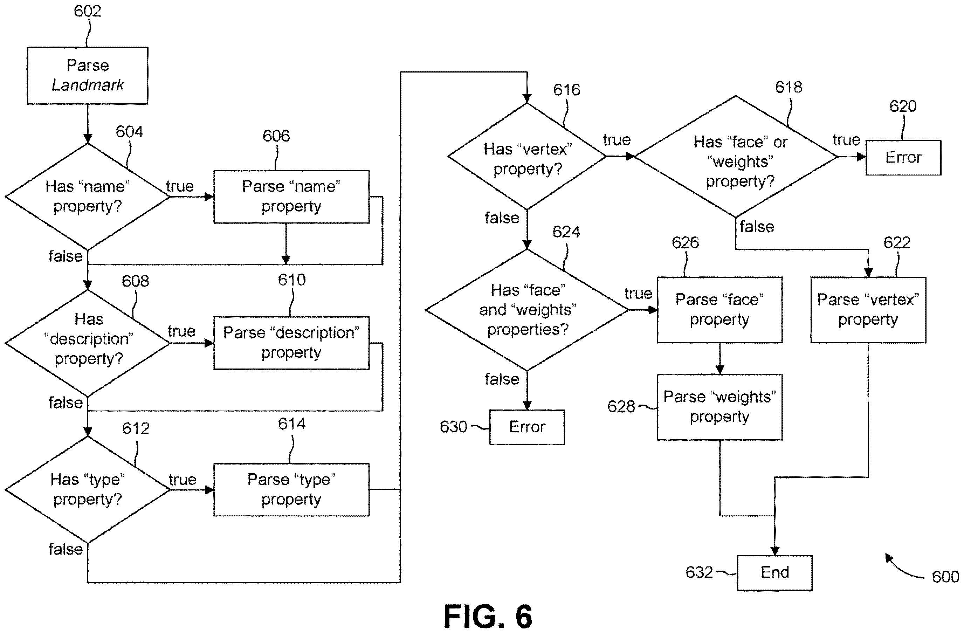

FIG. 6 is a flowchart illustrating an example process for parsing a *Landmark* property according to some embodiments. The example process 600 of FIG. 6 is not specific to gITF, AJIF, or any other particular scene description format. For some embodiments, a parsing 602 may occur every time a *Landmark* property is processed.

A determination 604 is made regarding the existence of the "name" property. If the "name" property exists in the data structure, block 606 parses the "name" property. A determination 608 is made regarding the existence of the "description" property. If the "description" property exists in the data structure, block 610 parses the "description" property. A determination 612 is made regarding the existence of the "type" property. If the "type" property exists in the data structure, block 614 parses the "type" property.

A determination 616 is made regarding the existence of the "vertex" property. If the "vertex" property exists in the data structure, a determination 618 is made regarding the existence of the "face" and "weights" properties. If either of these properties exists, then an error 620 is raised. If neither of these properties exist, then block 622 parses the "vertex" property and the example process 600 proceeds to the end box 632.

If the "vertex" property does not exist, then a determination 624 is made regarding the existence of the "face" and "weights" properties. If neither of these properties exist, then an error 630 is raised. If both of these properties exist, then block 626 parses the "face" property and block 628 parses the "weights" property. The example process 600 then proceeds to the end box 632. For some embodiments, the result of the data found during these applicable parsings 622, 626, 628 are stored in a dedicated structure, and the scene is not changed.

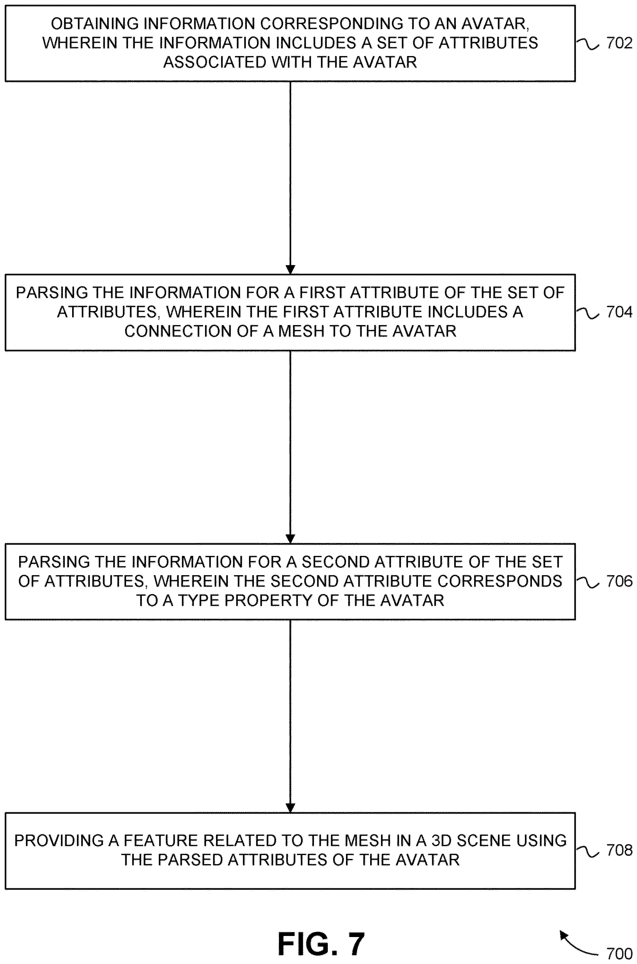

FIG. 7 is a flowchart illustrating an example process for parsing an avatar data structure according to some embodiments. For some embodiments, an example process 700 may include obtaining 702 information corresponding to the avatar, wherein the information includes a set of attributes associated with the avatar. For some embodiments, the example process 700 may further include parsing 704 the information for a first attribute of the set of attributes, wherein the first attribute includes a connection of a mesh to the avatar. For some embodiments, the example process 700 may further include parsing 706 the information for a second attribute of the set of attributes, wherein the second attribute corresponds to a type property of the avatar. For some embodiments, the example process 700 may further include rendering 708 the mesh in a 3D scene using the parsed attributes of the avatar.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

A first example method of communicating and parsing an avatar mesh landmark data structure in accordance with some embodiments, wherein the avatar mesh landmark data structure may include an identification of the avatar associated with a mesh, and at least one set of landmarks, wherein each of the at least one set of landmarks includes one or more landmarks, and wherein each of the one or more landmarks identify locations within the mesh.

A first example apparatus in accordance with some embodiments may include: a processor; and a memory storing instructions operative, when executed by the processor, to cause the apparatus to perform the first example method.

A second example method of processing an avatar mesh data structure in accordance with some embodiments, the method may include: obtaining the avatar mesh data structure corresponding to the avatar, wherein the avatar mesh data structure includes one or more landmark set data structures, wherein at least one of the one or more landmark set data structures includes: a name attribute, wherein the name attribute indicates a name of the landmark data structure, a description attribute, wherein the description attribute indicates a description of the landmark data structure, a type attribute, and wherein the type attribute indicates a property type of the landmark data structure, one or more landmark data structures, and wherein at least one of the one or more landmark data structures includes: a landmark name attribute, wherein the landmark name attribute indicates a name of the landmark data structure, a landmark description attribute, wherein the landmark description attribute indicates a description of the landmark data structure, a landmark type attribute, wherein the landmark type attribute indicates a property type of the landmark data structure, and a landmark location attribute, wherein the landmark location attribute indicates a location of a landmark within a mesh associated with the avatar mesh data structure; parsing the one or more landmark data structures into data sets corresponding to the respective landmarks; and rendering the mesh in a 3D scene using the data sets corresponding to the respective landmarks.

A second example apparatus in accordance with some embodiments may include: a processor; and a memory storing instructions operative, when executed by the processor, to cause the apparatus to perform the second example method.

A third example method in accordance with some embodiments may include: obtaining information corresponding to an avatar, wherein the information includes a set of attributes associated with the avatar; parsing the information for a first attribute of the set of attributes, wherein the first attribute includes a connection of a mesh to the avatar; parsing the information for a second attribute of the set of attributes, wherein the second attribute corresponds to a type property of the avatar; and rendering the mesh in a 3D scene using the parsed attributes of the avatar.

A third example apparatus in accordance with some embodiments may include: a processor; and a memory storing instructions operative, when executed by the processor, to cause the apparatus to perform the third example method.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining information corresponding to an avatar, wherein the information includes a set of attributes associated with the avatar; parsing the information for a first attribute of the set of attributes, wherein the first attribute includes a connection of a mesh to the avatar; parsing the information for a second attribute of the set of attributes, wherein the second attribute corresponds to a type property of the avatar; and providing a feature related to the mesh in a 3D scene using the parsed attributes of the avatar.

For some embodiments of the example method, parsing the information for the first attribute of the set of attributes includes performing a processing loop to process one or more landmark attributes.

For some embodiments of the example method, at least one of the one or more landmark attributes includes a vertex index associated with the mesh.

For some embodiments of the example method, at least one of the one or more landmark attributes includes a face index associated with the mesh and a set of one or more barycenter weights associated with the mesh.

For some embodiments of the example method, the landmark attributes include at least two sets of landmark attributes.

For some embodiments of the example method, parsing the information for the first attribute of the set of attributes includes: parsing the information for a first landmark attribute of a set of landmark attributes, wherein the first landmark attribute includes a landmark connection of a landmark to the avatar; parsing the information for a second landmark attribute of the set of landmark attributes, wherein the second landmark attribute corresponds to a type property of the landmark; and parsing the information for a third landmark attribute of the set of landmark attributes, wherein the third landmark attribute corresponds to a description of the landmark.

Some embodiments of the example method may further include parsing the information for a third attribute of the set of attributes, wherein the third attribute corresponds to a description of the avatar;

Some embodiments of the example method may further include parsing the information for a fourth attribute of the set of attributes, wherein the fourth attribute corresponds to a name of the avatar;

Some embodiments of the example method may further include parsing the information for a fifth attribute of the set of attributes, wherein the fifth attribute corresponds to a property of the mesh;

Some embodiments of the example method may further include parsing the information for a sixth attribute of the set of attributes, wherein the sixth attribute corresponds to a skeleton property of the mesh;

Some embodiments of the example method may further include parsing the information for a seventh attribute of the set of attributes, wherein the seventh attribute corresponds to a level of detail property of the mesh;

For some embodiments of the example method, the information complies with an Avatar Json Interchange File Format (AJIF) protocol.

For some embodiments of the example method, the information complies with a Graphics Library Transmission Format (gITF) protocol.

For some embodiments of the example method, the information complies with a format based on an MPEG-I extension standard.

An example apparatus in accordance with some embodiments may include: a processor; and a memory storing instructions operative, when executed by the processor, to cause the apparatus to perform the method of any one of the methods listed above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining information corresponding to an avatar, wherein the information comprises a set of attributes associated with the avatar;
parsing the information for a first attribute of the set of attributes, wherein the first attribute comprises a connection of a mesh to the avatar;
parsing the information for a second attribute of the set of attributes, wherein the second attribute corresponds to a type property of the avatar; and
providing a feature related to the mesh in a 3D scene using the parsed attributes of the avatar.

2. The method of claim 1, wherein parsing the information for the first attribute of the set of attributes comprises performing a processing loop to process one or more landmark attributes.

3. The method of claim 2, wherein at least one of the one or more landmark attributes comprises a vertex index associated with the mesh.

4. The method of claim 2, wherein at least one of the one or more landmark attributes comprises a face index associated with the mesh and a set of one or more barycenter weights associated with the mesh.

5. The method of any one of claims 3-4, wherein the landmark attributes comprise at least two sets of landmark attributes.

6. The method of any one of claims 1-5, wherein parsing the information for the first attribute of the set of attributes comprises:
parsing the information for a first landmark attribute of a set of landmark attributes,
wherein the first landmark attribute comprises a landmark connection of a landmark to the avatar;
parsing the information for a second landmark attribute of the set of landmark attributes,
wherein the second landmark attribute corresponds to a type property of the landmark; and parsing the information for a third landmark attribute of the set of landmark attributes,
wherein the third landmark attribute corresponds to a description of the landmark.

7. The method of any one of claims 1-6, further comprising:
parsing the information for a third attribute of the set of attributes,
wherein the third attribute corresponds to a description of the avatar.

8. The method of any one of claims 1-7, further comprising:
parsing the information for a fourth attribute of the set of attributes,
wherein the fourth attribute corresponds to a name of the avatar.

9. The method of any one of claims 1-8, further comprising:
parsing the information for a fifth attribute of the set of attributes,
wherein the fifth attribute corresponds to a property of the mesh.

10. The method of any one of claims 1-9, further comprising:
parsing the information for a sixth attribute of the set of attributes,
wherein the sixth attribute corresponds to a skeleton property of the mesh.

11. The method of any one of claims 1-9, further comprising:
parsing the information for a seventh attribute of the set of attributes,
wherein the seventh attribute corresponds to a level of detail property of the mesh.

12. The method of any one of claims 1-11, wherein the information complies with an Avatar Json Interchange File Format (AJIF) protocol.

13. The method of any one of claims 1-11, wherein the information complies with a Graphics Library Transmission Format (gITF) protocol.

14. The method of any one of claims 1-11, wherein the information complies with a format based on an MPEG-I extension standard.

15. An apparatus comprising:
a processor; and
a memory storing instructions operative, when executed by the processor, to cause the apparatus to perform the method of any one of claims 1 through 14.
